# EUROPEAN PATENT SPECIFICATION

(11) **EP 3 649 867 B1**
(45) Date of publication and mention of the grant of the patent: **23.03.2022**
(21) Application number: 19757482.5
(22) Date of filing: 21.02.2019
(51) Int. Cl.: A23D 9/00, A23L 5/00, A23L 7/126, A23L 11/00, A23L 19/00, A23L 25/00, A23L 27/00, A23L 27/10, A23L 27/14

(54) **MIXTURE OF FOOD AND OIL/FAT AND METHOD FOR PRODUCING SAME**
MISCHUNG AUS EINEM LEBENSMITTEL UND ÖL/FETT UND VERFAHREN ZU DEREN HERSTELLUNG
MÉLANGE D'UN ALIMENT ET D'UNE HUILE/GRAISSE ET SON PROCÉDÉ DE PRODUCTION

(30) Priority: 22.02.2018 JP 2018029962
(43) Date of publication of application: 13.05.2020
(73) Proprietor: Mizkan Holdings Co., Ltd., Handa-shi, Aichi 475-8585 (JP)
(72) Inventor: TAKEUCHI, Minoru, Handa-shi, Aichi 475-8585 (JP); NISHIOKA, Daisuke, Handa-shi, Aichi 475-8585 (JP)
(74) Representative: Mewburn Ellis LLP
(86) International application number: PCT/JP2019/006425
(87) International publication number: WO 2019/163857

(56) References cited:
- WO-A1-2018/155488
- WO-A1-2019/069490
- WO-A2-2019/023558
- JP-A- H1 175 760
- JP-A- S6 339 546
- JP-A- 2002 345 431
- JP-A- 2002 537 788
- JP-A- 2012 039 903
- JP-A- 2015 211 653
- JP-A- 2016 512 024
- JP-B1- 6 471 273

## Description

### Technical Field

The present invention relates to a food oil/fat mixture, a method for manufacturing the mixture, a method for maintaining texture and flavor, and a method for improving palatability.

### Background Art

Examples of dried foods include dried products of a vegetable, a bean, a root vegetable, a fruit or a seed, and a cereal food of a grain.

Specifically, dried vegetables include a dried onion, a dried Chinese cabbage; dried beans include a kidney bean chip and a soybean chip; dried root vegetables include a beet chip, a carrot chip; dried fruits include a raisin, a dried fig, a dried berry; dried seeds include a dried nut such as almond, walnut, pecan; cereals of grains include a processed product of corn, oat, wheat, barley, and rice crushed into thin pieces (flakes), a processed product of puffs (swollen), and a processed product of grains which are made into sheets and then crushed. Further, examples of the dried foods include Muesli, Granola prepared by mixing and/or seasoning.

These dried foods are mixed to be daily eaten as "cereals for meals".

Mostly, these are eaten with dairy products such as milk and yoghurt topped thereover, and may also be eaten with strawberry sauce, blueberry sauce, or the like topped thereover as a flavor.

However, since the dried foods have remarkably high moisture absorbability, they readily get humid by absorbing moisture from milk or yoghurt, thereby losing the original crunchy or crispy texture of the dried foods immediately while eating, its flavor being diffused into the water. As a result, the dried foods assume an unfavorably tacky texture and a weak flavor, with remarkably poor palatability.

Although the dried foods are distributed in containers or bags having low moisture permeability, after the containers or bags are unsealed, the dried foods unfavorably absorb moisture in the air, and they lose the original crunchy and/or crispy texture of the dried foods, with a weaker flavor.

From another perspective, the dried foods, to be eaten per se, give a dry and/or crumbling texture because they absorb water out of saliva in the oral cavity. Therefore they can stick to teeth and have difficulty in passing through the throat, and are remarkably poor in eatability. Thus, as described above, they are often eaten with dairy products topped thereover such as milk and yoghurt. However, in order to do so, it was necessary to prepare other foodstuffs such as milk or yoghurt, and a bowl in which the foodstuffs and the dried foods are mixed. It prevented from immediate eatability.

Granola is a product by baking a mixture of a processed grains with coconut, nut and the like with a syrup (molasses), such as a sugar, a honey, or a maple, and a vegetable oil in an oven. In the manufacture, the mixture may be agitated several times during the baking in the oven, the mixture may be crushed into an appropriately agglomerated shape after the completion of baking, or the mixture may be molded or solidified before or after baking to facilitate immediate eatability so that it can be eaten as it is in the form of a bar. However, since it is necessary for the manufacture of granola to bake in an oven at high temperature, nutrients may be lost due to thermal decomposition or the like though the granola contains a large amount of healthful plant-derived raw material. Further, the dried foods such as the processed grains, coconut, nut, and the like temporarily assume a gummy property by moisture in molasses or subsequent baking in the presence of moisture by mixing all the materials or baking in an oven while mixing them, and even if the dried foods are dried again by baking in an oven, the texture inherent in the dried food may be impaired.

To solve these issues, the following solutions have been proposed.

A technique is disclosed in which dry fruits containing sugar and glycerin and cereals containing sugar are mixed to give a dry food mixture, whereby water is not transferred from the dry fruit to the cereal, and the moisturizing property of the dry fruit and the texture of the cereal can be maintained (PTL 1). A technique is disclosed in which the outer surface of vacuum-freeze-dried fruit is coated or infiltrated with an oil-based food and the outer peripheral surface of vacuum-freeze-dried fruit is coated or infiltrated with a coating of Zein, whereby excellent water resistance and non-hygroscopicity are exhibited even when the fruit is contacted with moisture or moisture, and the original fruit shape, color, and flavor are utilized (PTL 2).

A technique relating to edible films is disclosed for packaging a food such as an instant food, having low moisture permeability and easy water solubility which protect a packaged content from deterioration due to moisture during distribution and storage and can be used for cooking or eating by bringing the food ingredients into water or hot water without unsealing (PTL 3). It is disclosed that, in the step of producing a rice cracker (senbei) by a conventional method, an oil film is formed on the surface of the rice cracker by a method of producing a rice cracker of excellent quality and productivity by adding the dough immediately after drying to a mixed emulsion of water and oil containing 20 to 50% oil for 2 to 8 seconds and subsequently baking at a temperature of 200 to 300°C, to give a rice cracker hard to moisture even if left to stand (PTL 4). It is disclosed that baked potato chips containing 3 to 50 wt% of oil/fat compositions containing 50 wt% or more of diglyceride and 2 wt% or less of monoglycerides are less susceptible to moisture, have a good texture, and have a good flavor (PTL 5). It is disclosed that an oil-immersed food material obtained by bringing a food material such as fish, vegetables or meat to a weight ratio of 1/1 to 20/1 to heat to 60 to 100°C and dehydrating the food material to a dehydration rate of 10 to 70 wt% of the retained moisture of the food material can sufficiently exhibit a favorable flavor, texture, color tone, and the like of the food material without changing the favorable flavor, texture, color tone, etc. of the food material, and can overcome an unpleasant flavor such as a malodor derived from raw materials (PTL 6). JP 2002-537788 A concerns nut spreads, especially peanut butters, comprising a darker roasted nut composition and a lighter roasted nut composition.

JP 2012-039903 discloses flavour oil compositions comprising two groups of particles of spice materials which differ by their average particle diameters.

US 5356644 discloses low calorie fat compositions comprising roughly spherical particles having a mean diameter of 250 microns which are surrounded by fat.

### Citations

### Patent Literatures

[PTL 1] JP-A-2017-6005
[PTL 2] JP-A-Hei 6-284875
[PTL 3] JP-A-2011-103788
[PTL 4] JP-A-Hei 7-184549
[PTL 5] JP-A-2002-191314
[PTL 6] JP-A-Hei 10-215762

### Summary of Invention

### Technical Problem

PTLs 1, 2 and 3, teach that the flavor and texture of dried foods can be maintained by containing sugar and/or glycerin, coating or infiltrating the oil/fat food and further forming a Zein film over the outer peripheral surface of the dried food, or wrapping the dried food with an edible film for food packaging. However, due to the properties derived from the raw materials and shapes of the dried food, the above techniques may not be generally applicable to all of these foods, and some objects are hard to apply the above techniques. Moreover, in contrast to inexpensive raw materials, due to the complicated process, there remains an issue of high costs. PTLs 4 and 5 teach that, in the manufacturing process of rice crackers and potato chips, impregnating oil before baking enables to maintain a pleasant texture and taste without getting moist. Because of the characteristics derived from the raw materials and shapes of the respective dry foods, there are objects to which the techniques may not be applied in general. Further, the flavor inherent to the food may be altered in some of the dry foods, because baking is performed after impregnating the oil, depending on the type of the dry foods. PTL 6 teaches that food materials such as fish, vegetables and meat can be prepared as an oil-immersed food with a favorable flavor, texture, color, etc. of the food material unchanged, by heating the food material together with oil/fat at a low temperature and dehydrating, but such a food material still lacks a crunchy and crispy feeling specific to the dry food.

Therefore, the present invention aims to provide a food/drink containing the dried food, which does not moist various dry foods without requiring costs and complicated labor, and retains a pleasant crunchy and/or crispy texture, flavors and nutrients, and that is excellent in eating readily.

### Solution to Problem

Therefore, under the circumstances, as a result of intensive studies, the present inventors found that, when dried foods derived from plants are embedded in a flowable oil/fat composition which contains a certain amount of fine plant particles having a small particle size, dried foods in the obtained mixture are not moist, and the mixture retains the inherent crunchy and/or crispy texture, flavor, and nutrients of the mixture, to obtain a food/drink composition excellent in eating readily, and the present invention was completed.

The present invention provides the following [1] to [22].
[1] A mixture of a food and an oil/fat, comprising: an oil/fat composition comprising fine plant particles and a plant oil/fat; and a plant-derived dried food embedded in the oil/fat composition, wherein
   the fine plant particles have an average particle diameter of 0.3 µm or more and 30 µm or less,
   the plant oil/fat has fluidity at 20°C,
   the weight percentage of the fine plant particles is 10 mass% or more and 80 mass% or less in the oil/fat composition, and
   the particle diameter of the plant-derived dried food is 50 µm or more and 20 mm or less.
[2] The mixture of the food and the oil/fat according to [1], wherein the weight percentage of the dried food is 20 mass% or more and 80 mass% or less in the mixture of the food and the oil/fat.
[3] The mixture of the food and the oil/fat according to [1] or [2], wherein the volume percentage of the dried food is 25 vol% or more and 65 vol% or less in the mixture of the food and the oil/fat.
[4] The mixture of the food and the oil/fat according to any one of [1] to [3], wherein the oil/fat composition comprising the fine plant particles and the plant oil/fat is prepared by wet micronization of dry plant powder with the plant oil/fat.
[5] The mixture of the food and the oil/fat according to [4], wherein the wet micronization is performed using a wet medium stirring mill.
[6] The mixture of the food and the oil/fat according to any one of [1] to [5], wherein the fine plant particles are derived from one or more materials selected from the group consisting of a grain, a potato, a bean, a seed, a vegetable, a mushroom, a spice and a herb.
[7] The mixture of the food and the oil/fat according to any one of [1] to [6], wherein the dried food is derived from one or more materials selected from the group consisting of a grain, a potato, a bean, a seed, a vegetable, a fruit, a mushroom, a spice and a herb.
[8] The mixture of the food and the oil/fat according to any one of [1] to [7], wherein the content of an emulsifier in the mixture of the food and the oil/fat is 1 mass% or less.
[9] The mixture of the food and the oil/fat according to any one of [1] to [8], wherein the water content in the mixture of the food and the oil/fat is 3 mass% or less.
[10] The mixture of the food and the oil/fat according to any one of [1] to [9], wherein the mixture of the food and the oil/fat is not heat-sterilized.
[11] A solidified mixture of a food and an oil/fat, which is prepared by solidifying the mixture of the food and the oil/fat according to any one of [1] to [10] using a sugar solution with a water content of 10 mass% or more and 40 mass% or less.
[12] The solidified mixture of the food and the oil/fat according to [11], wherein the sugar solution is one or more materials selected from the group consisting of a plant-derived juice, sap, a purified product of a plant-derived juice or sap and a concentrated product of a plant-derived juice or sap.
[13] The solidified mixture of the food and the oil/fat according to [12], wherein the plant-derived juice or sap, a purified product of a plant-derived juice or sap and or a concentrated product of a plant-derived juice or sap is derived from one or more materials selected from the group consisting of a fruit juice, a date, a sugarcane, a maple and a honey.
[14] A method for producing the mixture of the food and the oil/fat according to any one of [1] to [10], comprising mixing the dried food with the oil/fat composition comprising the fine plant particles and the plant oil/fat to embed the dried food in the oil/fat composition.
[15] The method according to [14], further comprising preparing the oil/fat composition through micronization of the fine plant particles and the plant oil/fat using a wet medium stirring mill.
[16] The method for producing the solidified mixture of the food and the oil/fat according to any one of [11] to [13], comprising adding a sugar solution with a water content of 10 mass% or more and 40 mass% or less to the mixture of the food and the oil/fat according to any one of [1] to [10] for solidification.
[17] The method according to [16], wherein the solidification is performed by heat-drying.
[18] A method for retaining the texture and the flavor of a plant-derived dried food, comprising mixing the dried food with an oil/fat composition to embed the dried food in the oil/fat composition, wherein the oil/fat composition comprises fine plant particles with an average particle diameter of 0.3 µm or more and 30 µm or less, and a plant oil/fat having fluidity at 20°C, and the weight percentage of the fine plant particles is 10 mass% or more and 80 mass% or less in the oil/fat composition, and the particle diameter of the plant-derived dried food is 50 µm or more and 20 mm or less.
[19] The method according to [18], further comprising preparing the oil/fat composition through micronization of the fine plant particles and the plant oil/fat using a wet medium stirring mill.
[20] A method for improving eatability while retaining the texture and the flavor of a plant-derived dried food, comprising adding a sugar solution with a water content of 10 mass% or more and 40 mass% or less to a mixture of a food and an oil/fat for solidifying the mixture, wherein the mixture is prepared by mixing a dried food with an oil/fat composition to embed the dried food in the oil/fat composition, wherein the oil/fat composition comprises fine plant particles with an average particle diameter of 0.3 µm or more and 30 µm or less, and a plant oil/fat having fluidity at 20°C, and the weight percentage of the fine plant particles is 10 mass% or more and 80 mass% or less in the oil/fat composition, and the particle diameter of the plant-derived dried food is 50 µm or more and 20 mm or less.
[21] The method according to [20], further comprising preparing the oil/fat composition through micronization of the fine plant particles and the plant oil/fat using a wet medium stirring mill.
[22] The method according to [20], wherein the solidification is performed by heat-drying.

### Advantageous Effect of the Invention

The present invention provides a mixture of a plant-derived dried food and a plant-derived oil/fat composition having fluidity at 20°C, in which dried foods are embedded in oil/fat composition to prevent the dried food from getting moist, to retain the original crunchy and crispy texture, flavor and nutrients, and to provide excellent immediate eatability.

### Detailed Description of the Invention

Hereinafter, the mixture of a food and an oil/fat, a production method thereof, a method for retaining texture and flavor, and a method for improving eatability of the present invention will be described in detail.

The present invention relates to a mixture containing a plant-derived dried food and a plant-derived oil/fat composition having fluidity at 20°C, wherein the oil/fat composition contains 10 mass% or more and 80 mass% or less of fine plant particles having an average particle diameter of 0.3 µm or more and 30 µm or less, and the dried food has a particle diameter of 50 microns or more and 20 millimetres or less, and is embedded in the oil/fat composition.

The term "plant-derived dried food(s)" in the present invention refers to an ingredient contained in a mixture of the present invention prepared by embedding the dried food in an oil/fat composition (hereinafter may also be referred to as "the mixture of the present invention"), and has crunchy and crispy textures. Specific examples thereof include dried products of a vegetable, a bean, a root vegetable, a fruit and a seed, and a cereal food such as grain. The expression "dry (or dried)" state as used herein means a state in which the water content is 20 mass% or less as measured by a heat-drying method, and refers to a state in which water activity after drying is lowered to a level that enables storage at room temperature (20°C) and allows no microbial growth regardless of the drying method.

Plant-derived dried foods may be those derived from one or more materials selected from the group consisting of a grain, a potato, a bean, a seed, a vegetable, a fruit, a mushroom, a spice and a herb.

Preferable examples of the grain include amaranth, foxtail millet, oat, barley, proso millet, wheat, rice, buckwheat, corn, pearl barley, Japanese barnyard millet, sorghum, rye, triticale, fonio, quinoa, giant corn, sugar cane and the like. Use of these grains is preferable since the grains assume crunchy and crispy textures. Each of the above foodstuffs can be used regardless of edible or non-edible parts.

Preferable examples of the potato include Jerusalem artichoke, konjac potato, sweet potato, *Satoimo (Colocasia esculenta), Mizuimo (Calla palustris), Yatsugashira* (*Colocasia esculenta Schott*), potato *(Solanum tubersum), Yamanoimo (Dioscorea japonica), Ichoimo* (kind of Chinese yams (*Dioscorea opposita Thunb*.)), *Nagaimo* (kind of Chinese yam *(Dioscorea polystachya*)), *Yamatoimo* (kind of Chinese yam *(Dioscorea japonica Thunb*.)), *Jinenjo* (or *Yamanoimo* (*Dioscorea japonica*)), purple yam, cassava, yacon, taro, Polynesian arrowroot, purple sweet lord, yam and the like. Use of these potatoes is preferable since the potatoes assume crunchy and crispy textures and sweetness. Each of the above foodstuffs can be used regardless of edible or non-edible parts.

Preferable examples of the bean include adzuki bean, kidney bean, pea, cowpea, broad bean, soybean, ricebean, chickpea, runner bean, lima bean, mung bean, lentil, green pea, winged bean, hyacinth bean and the like. Use of these beans is preferable since the beans assume crunchy and crispy textures, unique bean flavors, and specific color tones. Each of the above foodstuffs can be used regardless of edible or non-edible parts.

Preferable examples of the seed include almond, cannabis, perilla, cashew nut, Japanese torreya, ginkgo, chestnut, walnut, poppy, coconut, sesame, chinquapin, Japanese horse chestnut, lotus, water chestnut, pistachio, sunflower, brazil nut, hazelnut, pecan, macadamia nut, pine, groundnut and the like. Use of these seeds is preferable since the seeds assume a crunchy and crispy texture, unique chewiness and unique fragrant flavor. Each of the above foodstuffs can be used regardless of edible or non-edible parts.

Preferable examples of the vegetable include artichoke, *Asatsuki* (*Allium schoenoprasum var. foliosum*), *Ashitaba* (*Angelica keiskei*), asparagus, udo, *Yamaudo* (udo (*Aralia cordata Thunb*.)), green soybean, pea sprout, podded pea, snap pea, *Osaka shirona* (*Brassica campestris* var. *amplexicaulis*), saltwort, okra, turnip, pumpkin, mustard greens, cauliflower, dried gourd shaving (produced from bottle gourd), chrysanthemum, cabbage, green ball (cabbage), red cabbage, cucumber, victory onion, potherb mustard, Chinese celery, watercress, threeleaf arrowhead, kale, German turnip or turnip cabbage, ostrich fern, burdock, turnip green, sichuan vegetable, shantung vegetables, green pepper, perilla, yardlong bean, crown daisy, water shield, *Hashouga* (*Zingiber officinale*), ginger, oriental pickling melon, taro stem, turnip, zucchini, water dropwort, celery, Japanese royal fern, tatsoi spinach mustard, white radish sprouts, *Ha-daikon* (*Raphanus sativus var. longipinnatus*), Daikon, *Tsumamina* (*Brassica campestris var.peruviridis*), *Taisai* (*Brassica rapa* var. *chinensis*), *Takana* (leaf mustard), bamboo shoot, onion, red onion, *Taranome* (shoots of *Aralia elata*), chicory, qing-geng-cai, field horsetail, New Zealand spinach, Indian spinach, leopard plant, chili pepper, winter melon, sweet corn, young corn, tomato, red-leaved chicory, *Tonburi* (heat-processed product of the mature fruits of *Bassia scoparia*), semi-heading Chinese cabbage, eggplant, *Beinasu* (eggplant), shepherd's purse, tarnip rape, bitter cucumber, oriental garlic, spring star, yellow Chinese leek, *Ha-ninjin* (carrot), carrot, kyoto red carrot, mini carrot, garlic, garlic stem, green onion, *Nozawana* (*Brassica rapa* var. *hakabura*), *Nobiru* (*Allium macrostemon*), Chinese cabbage, Pak-choi, radish, chayote, beet, sweet pepper, *Hinona (Brassica campestris var. akana*), *Hiroshimana (Brassica campestris* var. *amplexicaulis*), fuki, Japanese butterbur, Swiss chard, broccoli, loofah, spinach, horseradish, manchurian wild rice, *Mizukakena* (*Brassica campestris* (rapifera group)), Japanese honeywort, myoga, propagule, Brussels sprout, smart weed sprout, bean sprout, Jew's mallow, pokeweed, lily bulb, water-convolvulus, *Yomena* (*Aster yomena*), mugwort, groundnut, Japanese shallot, shallot, leek, rhubarb, lettuce, butter lettuce, lettuce, lotus root, arugula, tree onion, Japanese horseradish, western bracken fern, *Kuzu* (*Pueraria lobata*), tea plant (brown), paprika and the like. Use of these vegetables is preferable since the vegetables assume crunchy and crispy textures, and strong unique aromas, tastes, and color tones. Each of the above foodstuffs can be used regardless of edible or non-edible parts.

Preferable examples of the fruit include akebia, acerola, atemoya, avocado, apricot, strawberry, fig, citrus iyo, Japanese apricot, citrus unshiu, olive, orange, persimmon, citrus kabosu, Chinese quince, kiwifruit, *Kiwano* (*Cucumis metuliferus*), kumquat, guava, gooseberry, thorny olive, grapefruit, coconut, starfruit, sweet cherry, pomegranate, citrus sulcata, shiikuwasha, watermelon, citrus sudachi, prum, prune, sour orange, tangor, tangelo, cherimoya custard apple, durian, citrus hassaku, passionfruit, banana, papaya, pitaya, *Hyuganatsu* (*Citrus tamurana*), loquat, grape, blueberry, pummelo, white sapote, ponkan mandarin, oriental melon, common quince, mango, mangosteen, melon, peach, nectarine, red bayberry, citrus yuzu, lychee, lime, raspberry, goldenberry, date (date fruits), longan, apple, lemon and the like. Use of these fruits is preferable since the fruits assume crunchy and crispy textures, and dried fruits' unique chewiness and unique strong aromas, tastes and color tones. Each of the above foodstuffs can be used regardless of edible or non-edible parts.

Preferable examples of the mushroom include winter mushroom, Jew's ear, abalone mushroom, *Shiitake* mushroom, *Hatakeshimeji* (*Lyophyllum decastes*), beech mushroom, *Honshimeji* (*Lyophyllum shimeji*), golden oyster mushroom, butterscotch mushroom, *Numerisugitake* (*Pholiota adiposa*), oyster mushroom, king oyster mushroom, *Maitake* mushroom, mushroom, *Matsutake* mushroom, black poplar mushroom and the like. Use of these mushrooms is preferable since the mushrooms assume crunchy and crispy textures, unique aroma, and umami. Each of the above foodstuffs can be used regardless of edible or non-edible parts.

Preferable examples of the spice and herb include allspice, clove, pepper, Japanese pepper, cinnamon, sage, thyme, chili pepper, nutmeg, basil, parsley, oregano, rosemary, peppermint, savory, lemongrass, dill, wasabi leaf, Japanese pepper leaf, stevia and the like. Use of these spices and herbs is preferable since they assume crunchy and crispy textures, and unique strong flavors. Each of the above foodstuffs can be used regardless of edible or non-edible parts.

A drying method for the above dried foods are not particularly limited as long as drying can be performed, and examples thereof include sun drying, shade drying, freeze drying, air drying (hot air drying, fluidized bed drying method, spray drying, drum drying, low temperature drying, etc.), pressure drying, vacuum drying, microwave drying, oil heat-drying, etc. Air drying (particularly drying at normal temperature or quick hot air drying in view of minimizing changes in quality) or freeze drying are preferably employed because these methods allow easy adjustment of water content regardless of materials and are convenient for industrial mass processing.

Among others, grains are preferably processed into cereals, specifically those prepared by crushing grains into thin pieces (flakes), by puffing (swelling) grains, or by mixing grains, shaping the mixture into sheets and then crushing the sheets, so as to facilitate eating with light force.

The dried food may be produced by drying foods by the above means or may be produced by pulverizing a dried food. In the case of a pulverized product, the particle diameter is 50 µm or more, preferably 75 µm or more, and more preferably 100 µm or more in view of retaining the texture and flavor of the dried food. The upper limit is 20 mm or less in view of eatability.

In the present invention, the plant-derived oil/fat composition comprises a composition containing oil/fat and fine plant particles having an average particle diameter of 0.3 µm or more and 30 µm or less in an amount of 10 mass% or more and 80 mass% or less. Of these, the oil/fat is not particularly limited as long as it has fluidity at 20°C, and examples thereof include sesame oil, rapeseed oil, soybean oil, palm mid fraction (PMF), cottonseed oil, corn oil, sunflower oil, safflower oil, olive oil, linseed oil, rice oil, camellia oil, perilla oil, grape seed oil, peanut oil, almond oil, avocado oil, salad oil, and canola oil. Among them, olive oil is preferable since its own flavor has unique preference and improves the flavor of the dried food mixture of the present invention. The fluidity of an oil/fat at 20°C can be measured by a technique using, e.g., a Bostwick consistometer (viscometer), and the oil/fat may be in forms ranging from paste to liquid.

In the present invention, the plant-derived oil/fat composition includes fine plant particles having an average particle diameter of 0.3 µm or more in view of viscosity at which the dried food is sufficiently embedded in the oil/fat composition and the homogeneity of the oil/fat composition. The average particle diameter is more preferably 0.5 µm or more, and even more preferably 1.0 µm or more, in view of a doubt about the safety of nanomaterials. On the other hand, the upper limit of the average particle diameter is 3C µm or less, more preferably 25 µm or less, and even more preferably 20 µm or less, in view of causing no rough texture derived from the oil/fat composition. Here, the average particle diameter is measured using a laser diffraction particle size distribution analyzer, such as Microtrac MT3300 EXII system manufactured by MicrotracBEL Corp., distilled water as a solvent for measurement, and DMS2 (Data Management System version 2, MicrotracBEL Corp.) as measurement application software, to find the particle size (d50) measured by DMS2.

The weight percentage of the fine plant particles in the oil/fat composition is 10 mass% or more, and, in view of viscosity at which the dried food is sufficiently embedded in the oil/fat composition and the homogeneity of the oil/fat composition, is preferably 15 mass% or more, and further preferably 20 mass% or more. On the other hand, the upper limit is 80 mass% or less, more preferably 70 mass% or less, and even more preferably 60 mass% or less, in view of the fluidity of the dried food for allowing sufficient embedding thereof in the oil/fat composition.

The plant from which the above fine plant particles are derived may be one or more materials selected from the group consisting of a grain, a potato, a bean, a seed, a vegetable, a mushroom, a spice and a herb.

Preferable examples of the grain include amaranth, foxtail millet, oat, barley, proso millet, wheat, rice, buckwheat, corn, pearl barley, Japanese barnyard millet, sorghum, rye, triticale, fonio, quinoa, giant corn, sugar cane and the like. Use of these grains is preferable since the grains assume strong sweetness and a strong dispersion-stabilizing effect. Each of the above foodstuffs can be used regardless of edible or non-edible parts.

Preferable examples of the potato include Jerusalem artichoke, konjac potato, sweet potato, *Satoimo* (*Colocasia esculenta*), *Mizuimo* (*Calla palustris*), *Yatsugashira* (*Colocasia esculenta Schott*), potato *(Solanum tuberosum), Yamanoimo (Dioscorea japonica), Ichoimo* (kind of Chinese yams (*Dioscorea opposita Thunb*.)), *Nagaimo* (kind of Chinese yam *(Dioscorea polystachya*)), *Yamatoimo* (kind of Chinese yam *(Dioscorea japonica Thunb*.)), *Jinenjo* (or *Yamanoimo* (*Dioscorea japonica*)), purple yam, cassava, yacon, taro, Polynesian arrowroot, purple sweet lord, yam and the like. Use of these potatoes is preferable since the potatoes assume strong viscosity. Each of the above foodstuffs can be used regardless of edible or non-edible parts.

Preferable examples of the bean include adzuki bean, kidney bean, pea, cowpea, broad bean, soybean, ricebean, chick pea, runner bean, lima bean, mung bean, lentil, green pea, winged bean, hyacinth bean and the like. Use of these beans is preferable since the beans assume a strong emulsifying effect. Each of the above foodstuffs can be used regardless of edible or non-edible parts.

Preferable examples of the seed include almond, cannabis, perilla, cashew nut, Japanese torreya, ginkgo, chestnut, walnut, poppy, coconut, sesame, chinquapin, Japanese horse chestnut, lotus, water chestnut, pistachio, sunflower, brazil nut, hazelnut, pecan, macadamia nut, pine, groundnut and the like. Use of these seeds is preferable since the seeds assume strong unique fragrance. Each of the above foodstuffs can be used regardless of edible or non-edible parts.

Preferable examples of the vegetable include artichoke, *Asatsuki* (*Allium schoenoprasum var. foliosum*), *Ashitaba* (*Angelica keiskei*), asparagus, udo, *Yamaudo* (udo (*Aralia cordata Thunb*)), green soybean, pea sprout, podded pea, snap pea, *Osaka shirona* (*Brassica campestris* var. *amplexicaulis*), saltwort, okra, turnip, pumpkin, mustard greens, cauliflower, dried gourd shaving (produced from bottle gourd), chrysanthemum, cabbage, green ball (cabbage), red cabbage, cucumber, victory onion, potherb mustard, Chinese celery, watercress, threeleaf arrowhead, kale, German turnip or turnip cabbage, ostrich fern, burdock, turnip green, sichuan vegetable, shantung vegetables, green pepper, perilla, yardlong bean, crown daisy, water shield, *Hashouga* (*Zingiber officinale*), ginger, oriental pickling melon, taro stem, turnip, zucchini, water dropwort, celery, Japanese royal fern, tatsoi spinach mustard, white radish sprouts, *Ha-daikon* (*Raphanus sativus var. longipinnatus*), *Daikon, Tsumamina* (*Brassica campestris var.peruviridis*), *Taisai* (*Brassica rapa* var. *chinensis*), *Takana* (leaf mustard), bamboo shoot, onion, red onion, *Taranome* (shoots of *Aralia elata*), chicory, qing-geng-cai, field horsetail, New Zealand spinach, Indian spinach, leopard plant, chili pepper, winter melon, sweet corn, young corn, tomato, red-leaved chicory, *Tonburi* (heat-processed product of the mature fruits of *Bassia scoparia*), semi-heading Chinese cabbage, eggplant, *Beinasu* (eggplant), shepherd's purse, tarnip rape, bitter cucumber, oriental garlic, spring star, yellow Chinese leek, *Ha-ninjin* (carrot), carrot, kyoto red carrot, mini carrot, garlic, garlic stem, green onion, *Nozawana* (*Brassica rapa* var. *hakabura*), *Nobiru* (*Allium macrostemon*), Chinese cabbage, Pak-choi, radish, chayote, beet, sweet pepper, *Hinona (Brassica campestris var. akana*), *Hiroshimana (Brassica campestris* var. *amplexicaulis*), fuki, Japanese butterbur, Swiss chard, broccoli, loofah, spinach, horseradish, manchurian wild rice, *Mizukakena* (*Brassica campestris* (rapifera group)), Japanese honeywort, myoga, propagule, Brussels sprout, smart weed sprout, bean sprout, Jew's mallow, pokeweed, lily bulb, water-convolvulus, *Yomena* (*Aster yomena*), mugwort, groundnut, Japanese shallot, shallot, leek, rhubarb, lettuce, butter lettuce, lettuce, lotus root, arugula, tree onion, Japanese horseradish, western bracken fern, *Kuzu* (*Pueraria lobata*), tea plant (brown), paprika and the like. Use of these vegetables is preferable since the vegetables assume strong unique aromas, tastes, and color tones. Each of the above foodstuffs can be used regardless of edible or non-edible parts.

Preferable examples of the mushroom include winter mushroom, Jew's ear, abalone mushroom, shiitake mushroom, *Hatakeshimeji* (*Lyophyllum decastes*), beech mushroom, *Honshimeji* (*Lyophyllum shimeji*), golden oyster mushroom, butterscotch mushroom, *Numerisugitake* (*Pholiota adiposa*), oyster mushroom, king oyster mushroom, *Maitake* mushroom, mushroom, *Matsutake* mushroom, black poplar mushroom and the like. Use of these mushrooms is preferable since the mushrooms assume strong unique aroma and umami. Each of the above foodstuffs can be used regardless of edible or non-edible parts.

Preferable examples of the spice and herb include allspice, clove, pepper, Japanese pepper, cinnamon, sage, thyme, chili pepper, nutmeg, basil, parsley, oregano, rosemary, peppermint, savory, lemongrass, dill, wasabi leaf, Japanese pepper leaf, stevia and the like. Use of these spices and herbs is preferable since they assume unique strong flavors. Each of the above foodstuffs can be used regardless of edible or non-edible parts.

In the present invention, the above plant-derived oil/fat composition is a plant-derived oil/fat composition containing fine plant particles and having fluidity at 20°C, wherein a plant-derived oil/fat contain fine plant particles. The plant-derived oil/fat composition is preferably produced by wet micronization of the above plant together with plant-derived oil/fat having fluidity at 20°C. The processing method may not be limited as long as it is capable of obtaining plant homogenates through processing with high shear force for a short time. For example, medium stirring mills such as a bead mill and a ball mill (rolling type, vibration type, planetary type mill, etc.), a roll mill, a colloid mill, a starburst, a high-pressure homogenizer, etc., can be used. In view of processing efficiency, a colloid mill, a high-pressure homogenizer, a roll mill, or a bead mill that is a medium stirring mill can be more suitably used. In particular, a medium stirring mill is preferable in view of the homogeneity of the components of the oil/fat composition after preparation. In addition, each method may employ a technique for processing via circulation of plant homogenates as a raw material, or a one-pass technique in which plant homogenates are caused to pass through only once, for example. In view of work efficiency, processing with the one-pass technique is preferable. The reason for this is that some dry micronization processes take effort and cost for obtaining a desired particle diameter via pulverization, and that handling of powders after pulverization is difficult because of powder swirling after pulverization (powders are excessively fine so as to fly around in the air) and its high hygroscopicity. On the other hand, since plants contain a large amount of dietary fibers with high water absorption, wet micronization in water is problematic in that plant fragments absorb water and swell during the micronization process, so as to stop the micronization, and that a large amount of plants cannot be processed at once for the same reason. Hence, wet micronization in oil/fat is preferable as described above.

The above oil/fat composition is preferably obtained through wet micronization of plant homogenates together with an oil/fat, and the plant is preferably dried and coarsely pulverized prior to the wet micronization. The drying method may not be limited as long as it is generally employed for drying foods, and examples thereof include sun drying, shade drying, freeze drying, air drying (hot air drying, fluidized bed drying method, spray drying, drum drying, low temperature drying, etc.), pressure drying, vacuum drying, microwave drying, oil heat-drying, etc. Air drying (particularly drying at normal temperature or quick hot air drying in view of minimizing changes in quality) or freeze drying are preferably employed because these methods allow easy adjustment of water content regardless of materials and are convenient for industrial mass processing.

The above coarse pulverization method is not particularly limited as long as it is a means capable of processing foods with a high shearing force in a short time. Examples of such methods may be any instruments referred to as a blender, a mixer, a mill machine, a kneader, a pulverizer, a disintegrator, a grinding mill and the like. The coarse pulverization method may be any of dry pulverization and wet pulverization, and may be any of high temperature pulverization, room temperature pulverization, and low temperature pulverization. Of these, dry pulverization and room temperature pulverization are preferable in view of work efficiency when used for further pulverization and minimizing changes in quality. The size of the coarsely pulverized powder is not particularly limited as long as it enables subsequent micronization in oil, and the size may be appropriately adjusted.

The lower limit of the weight percentage of the above dried food in the mixture of the present invention is preferably 20 mass% or more, more preferably 25 mass% or more, and even more preferably 30 mass% or more in view of the preferable texture of the overall mixture of the present invention. On the other hand, the upper limit is preferably 80 mass% or less, more preferably 75 mass% or less, and even more preferably 70 mass% or less in view of sufficient embedding of the dried food in the oil/fat.

The lower limit of the weight percentage of the oil/fat composition in the mixture of the present invention is preferably 20 mass% or more, more preferably 25 mass% or more and even more preferably 30 mass% or more in view of sufficient embedding of the dried food in the oil/fat composition. On the other hand, the upper limit thereof is preferably 80 mass% or less, more preferably 75 mass% or less, and even more preferably 70 mass% or less in view of the preferable texture of the overall mixture of the oil/fat composition and the dried food.

The volume percentage of the dried food in the whole volume of the mixture of the present invention is preferably 25 vol% or more, more preferably 30 vol% or more, and even more preferably 35 vol% or more in view of the preferable texture of the overall mixture of the present invention. On the other hand, the upper limit thereof is preferably 65 vol% or less, more preferably 60 vol% or less, and even more preferably 55 vol% or less in view of sufficient embedding of the dried food in the oil/fat composition. Regarding a method for measuring the volume percentage, it may be measured by collecting the dried food from the mixture and then measuring using the Archimedes' principle.

In the mixture of the present invention, the content of an emulsifier is usually 3 mass% or less, preferably 1 mass% or less, and particularly preferably 0.3 mass% or less. The reason of this is as follows: the oil/fat containing the fine plant particles itself has dispersion homogeneity and a dispersion stabilizing effect; thus even when the oil/fat composition containing the dry fine particles of the plant is mixed with the dried food, the homogeneity is not lost, and hence the dried food is embedded in the oil/fat composition; as a result, an emulsifier is not necessarily required. Moreover, there is a consumer orientation today of avoiding these food additives.

The mixture of the present invention preferably contains substantially no water except for trace amounts of water contained in the various raw materials. This is because when water is contained, a plant as the dried food absorbs water to impair the crunchy and crispy textures. Here, the water content is generally 5 mass% or less, preferably 3 mass% or less, and particularly preferably 1 mass% or less.

In the mixture of the present invention, the dried food is mixed in the oil/fat composition containing the fine plant particles to embed the whole dried food in the oil/fat composition, so that the dried food is shielded from air and does not absorb water. Therefore, the crunchy and crispy textures unique to the dried food is maintained. In addition, since the dried food is derived from a plant and contains a large amount of hygroscopic components, the dried food has a good property for absorbing water, but has a weak property for absorbing oil/fat. Hence, the crunchy and crispy textures specific to the dried food are not altered by the oil/fat composition. Therefore, the mixture of the present invention does not particularly require heat sterilization. In the mixture of the present invention, no dry food particles were visually observed as being exposed directly and completely on the surface of the oil/fat composition.

Therefore, when one eats the mixture of the present invention, (s)he can feel the smooth fluidity of the oil/fat composition and the crunchy and crispy textures of the dried food embedded therein simultaneously in the oral cavity. Furthermore, since the oil/fat composition contains the above fine plant particles, thick and favorable aroma and taste derived from the raw-material plant instantly spread as the collapse of the fine particles coated with the oil/fat film in the oral cavity. Hence, one can enjoy the crunchy and crispy textures of the dried food as a comfortable stimulus, while feeling rich and smooth flavor and smooth physical properties of the oil/fat composition. Overall, one can eat the mixture while feeling its preferable taste and texture.

The present invention also includes an embodiment which is prepared by mixing the above mixture of a food and an oil/fat (the mixture of the present invention) with a sugar solution having a water content of 10 mass% or more and 40 mass% or less, and then evaporating excessive water by heat-drying for solidification (this embodiment may also be referred to as a solidified product of the mixture of the present invention).

The solidified product of the mixture of the present invention is a solid product obtained by solidifying the whole mixture with a sugar solution, unlike the above mixture of the present invention having fluidity, and is an embodiment having no fluidity but additional convenient eatability, unlike the former mixture.

Since the mixture of the present invention assumes fluidity, one can eat it by pushing out of a bag or a tube, by scooping with a spoon from a container, or by applying it to or spreading it over other foods. On the other hand, since this solid product is solid, one can directly bite or lick the solid product while holding it by hands. Hence, it can be said that the solid product is an embodiment having increased immediate eatability compared to the former mixture.

The sugar solution is a solution that can be mixed with the mixture of the present invention for solidifying through heat-drying to evaporate excess water. Since the mixture of the present invention is prepared by using plant-derived raw materials, the sugar solution is preferably a plant-derived juice (including fruit juice) or sap, or a purified product thereof, and further a concentrate thereof in view of compatibility between raw materials. Specifically, the water content of the sugar solution may be 10 mass% or more, and in view of the easiness of homogenization upon mixing, aggregation/shape-keeping effect of raw materials other than the dried food and the oil/fat composition, the water content of the sugar solution is more preferably 12.5 mass% or more, and even more preferably 15 mass% or more. On the other hand, the upper limit thereof may be 40 mass% or less, and in view of preventing the deterioration of the flavor/physical properties of the dried food due to water, and in view of suppressing the deterioration of the flavor of the mixture of the dried food and the oil/fat composition due to the shortened heating time, the upper limit is more preferably 37.5 mass% or less, and even more preferably 35 mass% or less.

More specifically, the plant-derived juice (including fruit juice) or sap, which is the sugar solution, a purified product thereof or a concentrate thereof, is preferably derived from one or more materials selected from the group consisting of a concentrated juice of a fruit, a date, a sugar cane, a maple and a honey in view of the flavor, sugar concentration and composition. The lower limit of the sugar content of such sugar solution is 25 mass%.

The sugar solution contains water as described above, and the solution may be subjected to heat-drying in such a manner that excess water is evaporated until the mixture of the dried food and the oil/fat composition is solidified. Even during drying immediately after mixing with the sugar solution and even when a certain amount of water remains in the final solidified product after drying and solidification, the dried food in the mixture of the oil/fat composition and the dried food is embedded in the oil/fat composition having high temperature resistance and good homogeneous stability, and thus the embedding state created by these procedures from mixing of raw materials to solidification by heat-drying is maintained and the unique preferable crunchy and crispy textures are not impaired.

Accordingly, the low degree of heat-drying may be sufficient for raw materials other than the dried food and the oil/fat composition to be able to have moist texture. Therefore, due to such a low degree of heat-drying, the degree of thermal decomposition of nutritional elements contained in the fine plant particles contained in the plant-derived dried food and the oil/fat composition is also low, so that a food in which raw-material-derived nutritional elements are sufficiently maintained can be obtained.

Accordingly, when one eats the solidified product of the mixture of the present invention, (s)he can simultaneously feel the moist texture of the oil/fat composition and portions other than the dried food solidified with the sugar solution and the crunchy and crispy textures of the dried food embedded therein in the oral cavity, which are the same as those in the case of the mixture of the dried food and the oil/fat composition. Specifically, thick and favorable aroma and taste derived from the raw-material plant instantly spread as the collapse of the fine particles coated with the oil/fat film of the oil/fat composition in the oral cavity. Hence, one can enjoy the crunchy and crispy textures of the dried food as a comfortable stimulus, while feeling rich and smooth flavor and smooth physical properties of the oil/fat composition and the moist texture of raw-material portions other than the dried food. Overall, one can eat the solidified product while feeling preferable taste and texture.

The oil/fat composition, the mixture of the present invention, and the solidified product thereof may contain various foods and food additives, etc., as necessary, which are used for general foods, in view of maintaining quality and imparting a desired flavor, as long as the action and the effects of the present invention are not hindered. Examples thereof can include vinegar, a common salt, soy sauce, miso, an alcohol, an amino acid, a sugar (glucose, sucrose, fructose, glucose fructose liquid sugar, fructose glucose liquid sugar), a sugar alcohols (xylitol, erythritol, maltitol), artificial sweeteners (sucralose, aspartame, saccharin, acesulfame K), minerals (calcium, potassium, sodium, iron, zinc, magnesium, etc., and their salts), flavors, pH adjusters (sodium hydroxide, potassium hydroxide, lactic acid, citric acid, tartaric acid, malic acid, and acetic acid, etc.), cyclodextrin, an antioxidant (vitamin E, vitamin C, tea extract, fresh coffee bean extract, chlorogenic acid, spice extract, caffeic acid, rosemary extract, vitamin C palmitate, rutin, quercetin, bayberry extract, sesame extract etc.), various plant-derived powders, and a processed product derived from an edible plant such as various plant-derived pastes. Further, an emulsifier (glycerin fatty acid ester, acetic acid monoglyceride, lactic acid monoglyceride, citric acid monoglyceride, diacetyltartaric acid monoglyceride, succinic acid monoglyceride, polyglycerin fatty acid ester, polyglycerin condensed linosyl acid ester, Quillaja extract, soybean saponin, tea seed saponin, sucrose fatty acid ester) and a coloring agent can also be added. However, due to the recent increase in natural orientation, the quality such that no emulsifier and/or no coloring agent is added is desirable, and the quality such that general food additives (e.g., those listed in Indication of Food Additives, Pocket Book (2016 Edition)) are not contained is most desirable.

Since the solidified product of the mixture of the present invention is solidified (e.g., one can eat the product in various massive forms including a bar shape, a stick shape, a cookie shape, a granular shape, a block shape, etc.), unlike the mixture of the dried food and the oil/fat composition, the product requires no tableware and the like and can be provided as an embodiment with improved eatability excellent with immediate eatability.

The present invention also relates to a method for producing the mixture of a food and an oil/fat according of the invention, and the method includes mixing the dried food with an oil/fat composition to embed the dried food in the oil/fat composition, the oil/fat composition being prepared by drying a plant raw material for the plant-derived oil/fat composition, coarsely pulverizing the resultant, mixing the pulverized product with plant-derived oil/fat having fluidity at 20°C, and then subjecting the mixture to micronization together with the oil/fat using a wet medium stirring mill.

The present invention also relates to a method for producing a solidified mixture of a food and an oil/fat, and the method includes adding a sugar composition having a water content of 10 mass% or more and 40 mass% or less to the mixture of the food and the oil/fat of the present invention, mixing the resultant, and then heat-drying the mixture for solidification.

Moreover, the present invention also relates to a method for retaining the texture and the flavor of the mixture of a food and an oil/fat of the present invention, and the method includes mixing the dried food with an oil/fat composition to embed the dried food in the oil/fat composition, the oil/fat composition being prepared by drying a plant raw material for the plant-derived oil/fat composition, coarsely pulverizing the resultant, mixing the pulverized product with plant-derived oil/fat having fluidity at 20°C, and then subjecting the mixture to micronization together with the oil/fat using a wet medium stirring mill.

The present invention also relates to a method for improving eatability of a mixture of a food and an oil/fat while retaining texture and flavor through solidification, and the method includes adding a sugar solution having a water content of 10 mass% or more and 40 mass% or less to a mixture of a food and an oil/fat of the present invention, mixing the resultant, and then heat-drying the mixture for solidification.

### Examples

Hereinafter, the present invention will be described with reference to examples, but the present invention is not limited thereto.

### [Example 1] Verification of a method for maintaining the texture and the flavor of dried foods

Here, the method for maintaining the texture and flavor of the dried food(s) of the present invention was compared with conventional techniques for verification. According to each method shown in Table 1, the dried foods were mixed with each of various solvents, the mixture was left to stand for 2 hours under conditions of an atmospheric temperature of 20°C and a humidity of 60%, and then the effects on the texture and flavor of the dried foods were evaluated. Six professional panelists made evaluation and scored according to the following evaluation criteria (the results were rounded off to the nearest decimal place).

### (Evaluation criterion 1: Texture of dried foods)

5: Crunchy and crispy, significantly preferable.
4: Slightly crunchy and crispy, preferable.
3: Feel moist, but acceptable.
2: Slightly soft, boneless texture, unpreferable.
1: Soft, boneless texture, significantly unpreferable.

### (Evaluation criterion 2: Flavor of dried food)

5: Strong original flavor, significantly preferable.
4: Slightly strong original flavor, preferable.
3: Slightly weak original flavor, but acceptable.
2: Slightly weak original flavor, unpreferable.
1: Weak original flavor, significantly unpreferable.

### (Evaluation criterion 3: Overall evaluation)

5: Significantly superior.
4: Superior.
3: Acceptable.
2: Inferior.
1: Significantly inferior.

Results are shown in Table 1.

**[Table 1]**

| | Comparative example 1 | Comparative example 2 | Comparative example 3 | Comparative example 4 | Test example 1 |
|---|---|---|---|---|---|
| Solvent | Water | Milk | Sugar solution | Olive oil | Oil/fat composition |
| Composition | Water content 100% | Water content 87% | Date-derived concentrated juice (water content 20%) | Oil/fat 100% | Containing 40% beet powder (60% olive oil) |
| Mixing proportion (weight percentage, %) | 80 | 80 | 80 | 80 | 80 |
| Dried foods | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips |
| Mixing proportion (weight percentage, %) | 20 | 20 | 20 | 20 | 20 |
| Mixing proportion (volume percentage, %) | 40 | 40 | 40 | 40 | 40 |
| Texture | 1 | 1 | 2 | 3 | 5 |
| Flavor | 1 | 1 | 2 | 4 | 5 |
| Overall evaluation (including remarks) | 1 | 1 | 2 | 2 | 5 |
| Remarks | Dried foods absorbed water and thus sunk in the solvent. | Dried foods absorbed water and thus sunk in the solvent. | Dried foods absorbed water despite low water content, impairing texture and flavor. | Dried foods floated on the top of the solvent, leading to poor homogeneity, and the oil film had low viscosity, causing potions floating on the top to get moist. | Dried foods were homogeneously embedded in the solvent. |

As a result, when the dried foods were mixed with a solvent containing a large amount of water (Comparative Examples 1 and 2), the dried foods absorbed water, and then sunk into the solvent, damaging both texture and flavor significantly. Further, in a sugar solution having a relatively low water content and high viscosity (Comparative Example 3), the dried foods absorbed water despite of its low water content, damaging texture and flavor. In addition, when mixed with a 100% oil/fat solvent (Comparative Example 4), texture and flavor were not impaired, but the dried foods floated on the top of the solvent and the mixture was poor in homogeneity. Therefore, the overall evaluation was low. On the other hand, when the dried foods were mixed with the oil/fat composition obtained by mixing coarsely pulverized beets with olive oil and then subjecting the mixture to wet micronization using a medium stirring mill (bead mill) (Test Example 1), both the texture and the flavor of the dried foods were not impaired, the dried foods were embedded in the oil/fat composition, and the resultant was excellent in homogeneity. Homogeneity is considered to be an important factor because of the effect of maintaining a constant flavor balance among every meals upon eating. In conclusion, the oil/fat composition of Test Example 1 exhibiting homogeneity while maintaining texture and flavor was the most suitable for preparing a mixture of the dried foods. At this time, homogeneity was achieved without using any emulsifier. Further, it is clear that the mixture of Test Example 1 was substantially free of water due to the composition.

### [Example 2] Verification of the average particle diameter range of fine plant particles contained in oil/fat compositions

In Example 1, it was found that the oil/fat composition is good as a solvent for mixing with dried foods. Hence, the average particle diameter range of fine plant particles contained in the oil/fat compositions was verified.

Fine plant particles having different average particle diameters were prepared by coarsely pulverizing a dry plant to obtain a coarsely pulverized product using a dry pulverizer, or by further treating the coarsely pulverized product with a medium stirring mill (bead mill) having different bead diameters. The term "average particle diameter" as used herein refers to d50. Specific average particle diameters of the oil/fat compositions having different average particle diameters are as shown in Table 2. The average particle diameter of fine plant particles was measured using a laser diffraction particle size distribution analyzer (Microtrac MT3300 EXII system manufactured by MicrotracBEL Corp.), distilled water as a solvent upon measurement, DMS2 (Data Management System version 2, MicrotracBEL Corp.) as measurement application software, and "particle diameter (d50)".

These prepared oil/fat compositions were mixed with dried foods in the same manner as in Example 1, and then the texture and the flavor of the dried foods in the mixtures were evaluated. Evaluation was performed in the same manner as in Example 1. Dried food particles completely exposed on the oil/fat composition surface were not observed, so as to visually confirm that dried food particles were embedded in the oil/fat compositions.

Results are shown in Table 2.

**[Table 2]**

| | Comparative example 5 | Test example 2 | Test example 3 | Test example 4 | Test example 5 | Test example 6 | Test example 7 | Test example 8 | Test example 9 | Test example 10 | Comparative example 6 |
|---|---|---|---|---|---|---|---|---|---|---|---|
| Solvent | Oil/fat composition | Oil/fat composition | Oil/fat composition | Oil/fat composition | Oil/fat composition | Oil/fat composition | Oil/fat composition | Oil/fat composition | Oil/fat composition | Oil/fat composition | Oil/fat composition |
| Composition | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) |
| Average particle diameter of beet powder (µm) | 0.1 | 0.3 | 0.5 | 1.0 | 5 | 10 | 15 | 20 | 25 | 30 | 35 |
| Mixing proportion (weight percentage, %) | 80 | 80 | 80 | 80 | 80 | 80 | 80 | 80 | 80 | 80 | 80 |
| Dried foods | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips |
| Mixing proportion (weight percentage, %) | 20 | 20 | 20 | 20 | 20 | 20 | 20 | 20 | 20 | 20 | 20 |
| Mixing proportion (volume percentage, %) | 40 | 40 | 40 | 40 | 40 | 40 | 40 | 40 | 40 | 40 | 40 |
| Texture | 5 | 5 | 5 | 5 | 5 | 5 | 5 | 5 | 5 | 5 | 5 |
| Flavor | 5 | 5 | 5 | 5 | 5 | 5 | 5 | 5 | 5 | 5 | 5 |
| Overall evaluation (including remarks) | 2 | 3 | 4 | 5 | 5 | 5 | 5 | 5 | 4 | 3 | 2 |
| Remarks | Dried foods were embedded homogeneously in the solvent, but the treatment required to achieve the particle diameter took significant effort and time. | Dried foods were embedded homogeneously in the solvent, but the treatment required to achieve the particle diameter took some effort and time. | Dried foods were embedded homogeneously in the solvent, but the treatment required to achieve the particle diameter took some time. | Dried foods were embedded homogeneously in the solvent. | Dried foods were embedded homogeneously in the solvent. | Dried foods were embedded homogeneously in the solvent. | Dried foods were embedded homogeneously in the solvent. | Dried foods were embedded homogeneously in the solvent. | Only a small portion of the dried foods tended to float on the top of the solvent, but the homogeneity upon eating was normal. | A small portion of the dried foods tended to float on the top of the solvent, but the homogeneity upon eating was acceptable. | Graininess of the oil/fat composition was noticed, indicating poor smoothness. |

As a result, in all the test sections, both the texture and the flavor of the dried foods were remarkably excellent. However, when the average particle diameter of the plant powder in the oil/fat composition was 0.1 µm (Comparative Example 5), reducing the particle diameter down to this diameter required many steps of micronization with different bead diameters. Moreover, each step of this process needed a long time, and thus the micronization steps were impractical. Moreover, when the average particle diameter of the plant powder was 35 µm (Comparative Example 6), the oil/fat composition required to be smooth had graininess after taste, which was considered to be derived from the plant powder, indicating its unpreferable quality. Specifically, it was found that the optimum range of the particle diameter of the plant powder in the oil/fat composition may be 0.3 µm or more. However, 0.5 µm or more is more preferable, and 1.0 µm or more is even more preferable in view of effort and time required for the treatment and the doubt of the safety of nanomaterials. Meanwhile, it was found that the upper limit may be 30 µm or less. However, it was found that 25 µm or more is more preferable, and 20 µm or more is even more preferable in view of homogeneous dispersibility of the dried foods in the oil/fat composition. Further, it is clear that the mixtures of Test Examples 2 to 10 were substantially free of water due to the compositions. Moreover, crunchy and crispy textures unique to the dried foods were exhibited without heat sterilization.

### [Example 3] Verification of the range of the contents of fine plant particles contained in oil/fat compositions

In Example 2, it was found that the average particle diameter of fine plant particles contained in an oil/fat composition may range from 0.3 µm or more to 30 µm or less. Subsequently, here the range of the contents of fine plant particles having particle diameters within this range in oil/fat compositions was verified. Based on the results in Example 2, oil/fat compositions containing beet powder with an average particle diameter of 10 µm were prepared, the oil/fat compositions were mixed with olive oil as shown in Table 3, and then oil/fat compositions containing beet powder in different contents were prepared. Oil/fat compositions in which the content of beet powder was 50 mass% or more were newly prepared according to Example 1.

The dried foods were mixed in the same manner as in Example 1, and then the texture and the flavor etc., of the dried foods in the mixtures were evaluated. Evaluation was performed in the same manner as in Example 1. The oil/fat composition surface was observed so as to visually confirm that all the dried food particles were embedded in the oil/fat compositions.

Results are shown in Table 3.

**[Table 3]**

| | Comparative example 7 | Test example 11 | Test example 12 | Test example 13 | Test example 14 | Test example 15 | Test example 16 | Test example 17 | Test example 18 | Test example 19 | Test example 20 | Comparative example 8 |
|---|---|---|---|---|---|---|---|---|---|---|---|---|
| Solvent | Oil/fat composition | Oil/fat composition | Oil/fat composition | Oil/fat composition | Oil/fat composition | Oil/fat composition | Oil/fat composition | Oil/fat composition | Oil/fat composition | Oil/fat composition | Oil/fat composition | Oil/fat composition |
| Composition | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) | Containing 50% beet powder (50% olive oil) | Containing 60% beet powder (40% olive oil) | Containing 70% beet powder (30% olive oil) | Containing 75% beet powder (25% olive oil) | Containing 80% beet powder (20% olive oil) | Containing 85% beet powder (15% olive oil) |
| Average particle diameter of beet powder (µm) | 10 | 10 | 10 | 10 | 10 | 10 | 10 | 10 | 10 | 10 | 10 | 10 |
| Beet powder content (weight percentage, %) | 5 | 10 | 15 | 20 | 30 | 40 | 50 | 60 | 70 | 75 | 80 | 85 |
| Olive oil content (weight percentage, %) | 95 | 90 | 85 | 80 | 70 | 60 | 50 | 40 | 30 | 25 | 20 | 15 |
| Mixing proportion (weight percentage, %) | 80 | 80 | 80 | 80 | 80 | 80 | 80 | 80 | 80 | 80 | 80 | 80 |
| Dried foods | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips |
| Mixing proportion (weight percentage, %) | 20 | 20 | 20 | 20 | 20 | 20 | 20 | 20 | 20 | 20 | 20 | 20 |
| Mixing proportion (volume percentage, %) | 40 | 40 | 40 | 40 | 40 | 40 | 40 | 40 | 40 | 40 | 40 | 40 |
| Texture | 5 | 5 | 5 | 5 | 5 | 5 | 5 | 5 | 5 | 5 | 5 | 5 |
| Flavor | 5 | 5 | 5 | 5 | 5 | 5 | 5 | 5 | 5 | 5 | 5 | 5 |
| Overall evaluation (including remarks) | 2 | 3 | 4 | 5 | 5 | 5 | 5 | 5 | 4 | 3 | 3 | 2 |
| Remarks | A portion of the dried foods floated on the top of the solvent, indicating poor homogeneity. | A small portion of the dried foods tended to float on the top of the solvent, but the homogeneity upon eating was acceptable. | Only a small portion of the dried foods tended to float on the top of the solvent, but the homogeneity upon eating was normal. | The dried foods were embedded homogeneously in the solvent. | The dried foods were embedded homogeneously in the solvent. | The dried foods were embedded homogeneously in the solvent. | The dried foods were embedded homogeneously in the solvent. | The dried foods were embedded homogeneously in the solvent. | Homogenous dispersing of the dried foods required some effort because of slightly high viscosity, but this was not problematic. | Homogenous dispersing of the dried foods required effort because of high viscosity, but this was acceptable. | Homogenous dispersing of the dried foods required effort because of high viscosity, but this was acceptable. | Micronization of plant powder took much time. |

As a result, in all the test sections, both the texture and the flavor of the dried foods were remarkably excellent. However, when the weight percentage of the plant powder in the oil/fat composition was 5 mass% (Comparative Example 7), a portion of the dried foods floated on the top of the solvent, indicating poor homogeneity. Moreover, when the weight percentage of the plant powder in the oil/fat composition was 85 mass% (Comparative Example 8), the viscosity was very high, indicating impractical quality. Hence, it was found that the optimum range of the weight percentages of the plant powder in the oil/fat compositions may be 10 mass% or more. However, it was found that 15 mass% or more is more preferable, and 20 mass% or more is even more preferable in view of homogeneity of the dried foods in the oil/fat composition. On the other hand, it was found that the upper limit may be 80 mass% or less. However, it was found that 70 mass% or less is more preferable, and 60 mass% or less is even more preferable in view of the ease of homogenous mixing of the dried foods. Further, in this test, homogeneity was achieved without using any emulsifier. It is clear that the mixtures of these Test Examples 11 to 20 were substantially free of water due to the composition. Further, crunchy and crispy textures unique to the dried foods were exhibited without heat sterilization.

### [Example 4] Verification of the range of the mixing proportions of dried foods and oil/fat compositions in mixtures of the foods and oils/fats

Here, the optimum range of the mixing proportions of the dried foods and oil/fat compositions in the mixtures of the foods and oils/fats was verified. As shown in Table 4, the mixing proportions of the dried foods and the oil/fat compositions were varied to evaluate the texture and the flavor etc., of the dried foods in the mixtures and the overall taste of the mixtures of the foods and the oils/fats (Evaluation Criterion 4). Further, based on the results of Example 2, oil/fat compositions containing beet powder having an average particle diameter of 10 µm were prepared. Based on the result of Example 3, the weight percentage of the beet powder in the oil/fat composition was 40 mass%. Except for Evaluation criterion 4, the dried foods were mixed and then evaluated in the same manner as in Example 1. Evaluation was performed in the same manner as in Example 1. The dried food particles completely exposed on the oil-fat composition surface were not observed, so as to visually confirm that the dried food particles were embedded in the oil/fat compositions.

### (Evaluation criterion 4: Overall taste of mixture of food and oil/fat)

5: Crunchy and crispy textures of the dried foods matched the taste and smoothness of the oil/fat composition in a balanced manner. Significantly preferable.
4: Crunchy and crispy textures of the dried foods matched the taste and smoothness of the oil/fat composition in a slightly balanced manner. Preferable.
3: Balance between the crunchy and crispy textures of the dried foods and the taste and smoothness of the oil/fat composition was acceptable.
2: Balance between the crunchy and crispy textures of the dried foods and the taste and smoothness of the oil/fat composition was slightly bad. Unpreferable.
1: Balance between the crunchy and crispy textures of the dried foods and the taste and smoothness of the oil/fat composition was bad. Significantly unpreferable.

Results are shown in Table 4.

**[Table 4]**

| | Comparative example 9 | Test example 21 | Test example 22 | Test example 23 | Test example 24 | Test example 25 | Test example 26 | Test example 27 | Test example 28 | Test example 29 | Comparative example 10 |
|---|---|---|---|---|---|---|---|---|---|---|---|
| Solvent | Oil/fat composition | Oil/fat composition | Oil/fat composition | Oil/fat composition | Oil/fat composition | Oil/fat composition | Oil/fat composition | Oil/fat composition | Oil/fat composition | Oil/fat composition | Oil/fat composition |
| Composition | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) |
| Average particle diameter of beet powder (µm) | 10 | 10 | 10 | 10 | 10 | 10 | 10 | 10 | 10 | 10 | 10 |
| Beet powder content (weight percentage, %) | 40 | 40 | 40 | 40 | 40 | 40 | 40 | 40 | 40 | 40 | 40 |
| Olive oil content (weight percentage, %) | 60 | 60 | 60 | 60 | 60 | 60 | 60 | 60 | 60 | 60 | 60 |
| Mixing proportion (weight percentage, %) | 85 | 80 | 75 | 70 | 60 | 50 | 40 | 30 | 25 | 20 | 15 |
| Dried foods | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips |
| Mixing proportion (weight percentage, %) | 15 | 20 | 25 | 30 | 40 | 50 | 60 | 70 | 75 | 80 | 85 |
| Texture of dried foods | 5 | 5 | 5 | 5 | 5 | 5 | 5 | 5 | 4 | 4 | 3 |
| Flavor of dried foods | 5 | 5 | 5 | 5 | 5 | 5 | 5 | 5 | 5 | 4 | 3 |
| Taste of overall mixture of foods and oil/fat | 2 | 3 | 4 | 5 | 5 | 5 | 5 | 5 | 4 | 3 | 2 |
| Overall evaluation (including remarks) | 2 | 3 | 4 | 5 | 5 | 5 | 5 | 5 | 4 | 3 | 2 |
| Remarks | Dried food content was excessively low, resulting in the lack of the texture. | Dried food content was lower, but the texture was acceptable. | Dried food content was slightly lower, but it caused no significant effect. | Dried foods were embedded homogeneously in the solvent, and the texture of the dried foods was excellent in homogeneity and strength. | Dried foods were embedded homogeneously in the solvent, and the texture of the dried foods was excellent in homogeneity and strength. | Dried foods were embedded homogeneously in the solvent, and the texture of the dried foods was excellent in homogeneity and strength. | Dried foods were embedded homogeneously in the solvent, and the texture of the dried foods was excellent in homogeneity and strength. | Dried foods were embedded homogeneously in the solvent, and the texture of the dried foods was excellent in homogeneity and strength. | The amount of the oil/fat composition was slightly lower, but it caused no significant effect. | The amount of the oil/fat composition was lower, and the degree of embedding of the dried foods was slightly weak, but was acceptable. | The amount of the oil/fat composition was excessively low, and thus the dried foods were not sufficiently embedded. |

As a result, it was found that the weight percentage of the dried foods may be 20 mass% or more (the weight percentage of the oil/fat composition is 80 mass% or less). However, in view of the balance of the texture and the flavor strength derived from the dried foods in the taste of the overall mixture, 25 mass% or more (the weight percentage of the oil/fat composition is 75% or less), and 30 mass% or more (the weight percentage of the oil/fat composition is 70 mass% or less) is more preferable. On the other hand, it was found that the upper limit of the weight percentage of the dried foods may be 80 mass% or less (the weight percentage of the oil/fat composition is 20 mass% or more). However, in view of maintaining the texture and the flavor through sufficient embedding of the dried foods in the oil/fat composition, 75 mass% or less (the weight percentage of the oil/fat composition is 25 mass% or more) is more preferable, and 70 mass% or less (the weight percentage of the oil/fat composition is 30 mass% or more) is further preferable. Further, it is clear that the mixtures of Test Examples 21 to 29 were substantially free of water due to the composition. Further, crunchy and crispy textures unique to the dried foods were exhibited without heat sterilization.

### [Example 5] Verification of the range of the volume percentages of dried foods in mixtures of foods and oils/fats

In Example 4, the range of the weight percentages of the dried foods in the mixtures of the foods and oils/fats was verified. However, the dried foods were varied in types, specifically in bulk specific gravity ranging from high to low gravities, and the total volume of these dried foods has a great impact upon embedding of the dried foods in the oil/fat composition. Therefore, the optimum range of the volume percentages of the dried foods in the mixture of the foods and the oil/fat was verified.

The types and amounts of dried foods each differing in bulk specific gravity were combined to prepare the mixtures of the foods and the oils/fats having volume percentages as shown in Table 5 and then the mixtures were evaluated in the same manner as in Examples 1 and 4. The oil/fat composition surface was observed so as to visually confirm that all the dried food particles were embedded in the oil/fat compositions.

Results are shown in Table 5.

**[Table 5]**

| | Comparative example 11 | Test example 30 | Test example 31 | Test example 32 | Test example 34 | Test example 35 | Test example 36 | Test example 37 | Test example 38 | Comparative example 12 |
|---|---|---|---|---|---|---|---|---|---|---|
| Solvent | Oil/fat composition | Oil/fat composition | Oil/fat composition | Oil/fat composition | Oil/fat composition | Oil/fat composition | Oil/fat composition | Oil/fat composition | Oil/fat composition | Oil/fat composition |
| Composition | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) |
| Average particle diameter of beet powder (µm) | 10 | 10 | 10 | 10 | 10 | 10 | 10 | 10 | 10 | 10 |
| Beet powder content (weight percentage, %) | 40 | 40 | 40 | 40 | 40 | 40 | 40 | 40 | 40 | 40 |
| Olive oil content (weight percentage, %) | 60 | 60 | 60 | 60 | 60 | 60 | 60 | 60 | 60 | 60 |
| Mixing proportion (volume percentage, %) | 80 | 75 | 70 | 65 | 60 | 50 | 45 | 40 | 35 | 30 |
| Dried foods (types and amounts were combined adequately) | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips |
| Mixing proportion (volume percentage, %) | 20 | 25 | 30 | 35 | 40 | 50 | 55 | 60 | 65 | 70 |
| Texture of dried foods | 5 | 5 | 5 | 5 | 5 | 5 | 5 | 4 | 4 | 3 |
| Flavor of dried foods | 5 | 5 | 5 | 5 | 5 | 5 | 5 | 5 | 4 | 3 |
| Taste of overall mixture of foods and oil/fat | 2 | 3 | 4 | 5 | 5 | 5 | 5 | 4 | 3 | 2 |
| Overall evaluation (including remarks) | 2 | 3 | 4 | 5 | 5 | 5 | 5 | 4 | 3 | 2 |
| Remarks | The amount of the oil/fat composition was excessively high, resulting in the lack of the strength of texture. | The amount of the oil/fat composition was higher, but the strength of texture was acceptable. | The amount of the oil/fat composition was slightly higher, but it caused no significant effect. | The oil/fat composition was embedded homogeneously in the solvent, and the texture of the dried foods was excellent in homogeneity and strength. | The oil/fat composition was embedded homogeneously in the solvent, and the texture of the dried foods was excellent in homogeneity and strength. | The oil/fat composition was embedded homogeneously in the solvent, and the texture of the dried foods was excellent in homogeneity and strength. | The oil/fat composition was embedded homogeneously in the solvent, and the texture of the dried foods was excellent in homogeneity and strength. | The amount of the dried foods was slightly higher, but it caused no significant effect. | The amount of the dried foods was higher, and the degree of embedding in the oil/fat composition was slightly weak, but acceptable. | The amount of the dried foods was excessively high, and thus the dried foods were not sufficiently embedded in the oil/fat composition. |

As a result, it was found that the volume percentage of the dried foods may be 25 vol% or more. However, it was found that 30 vol% or more is more preferable, and 35 vol% or more is even more preferable in view of the balance of texture and flavor strength derived from the dried foods in the taste of the overall mixture. On the other hand, it was found that the upper limit of the volume percentage of the dried foods may be 65 volume% or less. However, it was found that 60 vol% or less is more preferable, and 55 vol% or less is even more preferable in view of maintaining texture and flavor through sufficient embedding of the dried foods in the oil/fat composition. Moreover, it is clear that the mixtures of Test Examples 30 to 38 were substantially free of water due to the composition. Further, crunchy and crispy textures unique to the dried foods were exhibited without heat sterilization.

### [Example 6] Preparation of mixtures of foods and oils/fats

According to Examples 1 to 5, conditions for exhibiting crunchy and crispy textures of the dried foods in the mixtures of the foods and the oils/fats, and conditions for exhibiting flavor and a smooth texture derived from the oil/fat composition and texture and flavor strength derived from the dried foods in the taste of the overall mixture in a balanced manner were clarified. Therefore, an examination was conducted here to prepare a product with a higher degree of completion.

According to the formulae described in Table 6, the mixtures of foods and oils/fats were prepared and then the mixtures were evaluated in the same manner as in Examples 1 and 4. Each mixture was eaten in a way such that one eats the mixture by scooping it with a spoon from a cup. Further, dried food particles completely exposed on the oil/fat composition surface were not observed, so as to visually confirm that dried food particles were completely embedded in the oil/fat compositions.

Results are shown in Table 6.

**[Table 6]**

| | | | Test example 39 | | Test example 40 | |
|---|---|---|---|---|---|---|
| Raw materials, etc. | | | Amount mixed (g) | Proportion (weight percentage, %) | Amount mixed (g) | Proportion (weight percentage, %) |
| Oil/fat composition (components listed on the right were mixed, followed by micro nizatio n with medium stirring mill (bead mill). | Plant oil/fat | Sesame oil | 430 | 60 | 445 | 63 |
| | Plant powder | Coarse beet powder | 140 | 40 | - | 37 |
| | | Coarse sweet potato powder | 80 | | | |
| | | Coarse Chinese cabbage powder | 70 | | - | |
| | | Green soybean powder | - | | 260 | |
| | Average particle diameter (µm) | | 12.3 | | 15.6 | |
| | Mixing proportion (weight percentage, %) | | 72 | | 71 | |
| Dried foods | Quinoa puff | | 40 | | 30 | |
| | Dried goldenberries | | 105 | | - | |
| | Beet chips | | 70 | | - | |
| | Carrot chips | | 65 | | - | |
| | Onion chips | | - | | 20 | |
| | Kidney bean chips | | - | | 195 | |
| | Mixing proportion (weight percentage, %) | | 28 | | 25 | |
| | Mixing proportion (volume percentage, %) | | 29 | | 63 | |
| Others | Cashew nuts paste | | - | | 49 | |
| | White pepper powder | | - | | 1 | |
| Total | | | 1000 | | 1000 | |
| Evaluation results | Flavor of dried foods | | 5 | | 5 | |
| | Texture of dried foods | | 5 | | 5 | |
| | Taste of overall mixture of foods and oil/fat | | 5 | | 5 | |
| | Overall evaluation (including remarks) | | 5 | | 5 | |
| | Remarks | | The crunchy and crispy textures of the dried foods matched the moist taste, smooth texture, and strong flavor of the oil/fat composition in a balanced manner, and the color tone (vibrant magenta) was good. | | The crunchy and crispy textures of the dried foods matched the moist taste, smooth texture, and strong flavor of the oil/fat composition in a balanced manner, and the color tone (vibrant green) was good. | |

As a result, it was found that even in concomitant use of oil/fat compositions and different plant powders, concomitant use of different dried foods, or in a combination with raw materials other than these materials, the action and the effects of the present invention were clearly exhibited. Specifically, the crunchy and crispy textures of the dried foods matched the moist taste, smooth texture, and strong flavor of the oil/fat composition in a balanced manner and the color tone was also vivid, demonstrating that the resulting food product enables significantly enjoyable experience of eating. Further, it is clear that the mixtures of Test Examples 39 and 40 were substantially free of water due to the composition. Moreover, crunchy and crispy textures unique to the dried foods were exhibited without heat sterilization.

### [Example 7] Preliminary examination of preparation of solidified mixtures of foods and oils/fats

In Examples 1 to 6, conditions for preparation of mixtures of foods and oils/fats were examined. As a result, the optimum conditions for preparation and the range thereof were clarified. Therefore, upon an attempt of the solidification of the mixtures, which is an embodiment having improved immediate eatability, the optimum range of the water content of the sugar solution, which is a means thereof, was verified here.

A sugar solution with each water content shown in Table 7 was used and mixed with the above mixture, and then the mixture was heat-dried to evaporate excess water until it was solidified. The solids were evaluated. Evaluation was performed in the same manner as in Examples 1 and 4. The oil/fat composition surface was observed so as to visually confirm that all the dried food particles were embedded in the oil/fat compositions.

Results are shown in Table 7.

**[Table 7]**

| | Comparative example 13 | Test example 41 | Test example 42 | Test example 43 | Test example 44 | Test example 45 | Test example 46 | Test example 47 | Test example 48 | Comparative example 14 |
|---|---|---|---|---|---|---|---|---|---|---|
| Solvent | Oil/fat composition | Oil/fat composition | Oil/fat composition | Oil/fat composition | Oil/fat composition | Oil/fat composition | Oil/fat composition | Oil/fat composition | Oil/fat composition | Oil/fat composition |
| Composition | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) | Containing 40% beet powder (60% olive oil) |
| Average particle diameter of beet powder (µm) | 10 | 10 | 10 | 10 | 10 | 10 | 10 | 10 | 10 | 10 |
| Beet powder content (weight percentage, %) | 40 | 40 | 40 | 40 | 40 | 40 | 40 | 40 | 40 | 40 |
| Olive oil content (weight percentage, %) | 60 | 60 | 60 | 60 | 60 | 60 | 60 | 60 | 60 | 60 |
| Mixing proportion (weight percentage, %) | 48 | 48 | 48 | 48 | 48 | 48 | 48 | 48 | 48 | 48 |
| Dried foods | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips | Quinoa puff Raisin Carrot chips |
| Mixing proportion (weight percentage, %) | 32 | 32 | 32 | 32 | 32 | 32 | 32 | 32 | 32 | 32 |
| Sugar solution | Concentrated date juice | Concentrated date juice | Concentrated date juice | Concentrated date juice | Concentrated date juice | Concentrated date juice | Concentrated date juice | Concentrated date juice | Concentrated date juice | Concentrated date juice |
| Water content (wt%) | 7.5 | 10 | 12.5 | 15 | 20 | 30 | 35 | 37.5 | 40 | 42.5 |
| Mixing proportion (weight percentage, %) | 20 | 20 | 20 | 20 | 20 | 20 | 20 | 20 | 20 | 20 |
| Texture of dried foods | 5 | 5 | 5 | 5 | 5 | 5 | 5 | 4 | 4 | 3 |
| Flavor of dried foods | 5 | 5 | 5 | 5 | 5 | 5 | 5 | 5 | 4 | 3 |
| Taste of overall mixture of foods and oil/fat | 2 | 3 | 4 | 5 | 5 | 5 | 5 | 4 | 3 | 2 |
| Overall evaluation (including remarks) | 2 | 3 | 4 | 5 | 5 | 5 | 5 | 4 | 3 | 2 |
| Remarks | Difficult to mix uniformly with the sugar solution; easy to shape before heat drying; but weak moist taste and unevenness after solidification were perceived, indicating poor quality. | Slightly difficult to mix uniformly with the sugar solution; weak moist feeling after solidification was slightly perceived; but acceptable quality. | Slightly difficult to mix uniformly with the sugar solution; but moderate moist taste after solidification were perceived. No problem. | Possible to mix uniformly with the sugar solution; easy to shape before heat drying; moderate moist taste after solidification were perceived. | Possible to mix uniformly with the sugar solution; easy to shape before heat drying; moderate moist taste after solidification was perceived. | Possible to mix uniformly with the sugar solution; easy to shape before heat drying; moderate moist taste after solidification were perceived. | Possible to mix uniformly with the sugar solution; easy to shape before heat drying; moderate moist taste after solidification was perceived. | Possible to mix uniformly with the sugar solution; only a small portion of the dried foods got moist; the overall texture and taste after solidification by heat drying were no problem. | Possible to mix uniformly with the sugar solution; a portion of the dried foods got moist; but the overall texture and taste after solidification by heat drying were acceptable. | Possible to mix uniformly with the sugar solution; but the dried foods got moist, and the overall texture and taste after solidification by heat drying were poor. |

As a result, when the water content in the concentrated date juice as a sugar solution was 7.5 mass% (Comparative Example 13), the viscosity of the sugar solution was so high that uniform mixing was difficult, and the moist feeling was weak after heat-drying and the resultant exhibited unevenness, indicating poor quality. When the water content was 42.5 mass% (Comparative Example 14), the sugar solution was easily mixed uniformly, but in the process, the state of the dried foods embedded in the oil/fat composition was impaired, the dried foods absorbed water to get moist in the mixture, and the texture and flavor were not recovered even after solidification by heat-drying, indicating poor texture and taste. Specifically, it was found that the sugar solution may have a water content of 10 mass% or more. However, it was found that 12.5 mass% or more is more preferable, and 15 mass% or more is even more preferable in view of retaining uniform mixing of the sugar solution and sufficient moist feeling. Regarding the upper limit, it was found that it may be 40 mass% or less. However, in view of preventing the dried foods from further getting moist and maintaining the original texture, it was found that 37.5 mass% or less is more preferable and 35 mass% or less is even more preferable. In addition, the mixtures of Test Examples 41 to 48, considering the composition, it is clear that they were substantially free of water.

### [Example 8] Examination of sugar solution types

In Example 7, concentrated date juice was used as the sugar solution. It was further examined whether other sugar solutions shown in Table 8 could be solidified. Based on the results of Example 7, each sugar solution was prepared in such a manner that the water content was 20 mass%. Each of solidified mixtures of foods and oils/fats was prepared in the same manner as in Example 7, and then evaluated in the same manner as in Examples 1 and 4. The oil/fat composition surface was observed so as to visually confirm that all the dried food particles were embedded in the oil/fat compositions.

Results are shown in Table 8.

**[Table 8]**

| | Test example 49 | Test example 50 | Test example 51 | Test example 52 |
|---|---|---|---|---|
| Solvent | Oil/fat composition | Oil/fat composition | Oil/fat composition | Oil/fat composition |
| Composition | Containing 40% beet powder (60% olive oil) | Containing 40% beet powder (60% olive oil) | Containing 40% beet powder (60% olive oil) | Containing 40% beet powder (60% olive oil) |
| Average particle diameter of beet powder (µm) | 10 | 10 | 10 | 10 |
| Beet powder content (weight percentage, %) | 40 | 40 | 40 | 40 |
| Olive oil content (weight percentage, %) | 60 | 60 | 60 | 60 |
| Mixing proportion (weight percentage, %) | 48 | 48 | 48 | 48 |
| Dried foods | Quinoa puff Raisin Carrot chips | Quinoa puff Raisin Carrot chips | Quinoa puff Raisin Carrot chips | Quinoa puff Raisin Carrot chips |
| Mixing proportion (weight percentage, %) | 32 | 32 | 32 | 32 |
| Sugar solution | Concentrated date juice | Concentrated sugarcane juice | Concentrated maple syrup | Honey |
| Water content (wt%) | 20 | 20 | 20 | 20 |
| Mixing proportion (weight percentage, %) | 20 | 20 | 20 | 20 |
| Texture of dried foods | 5 | 5 | 5 | 5 |
| Flavor of dried foods | 5 | 5 | 5 | 5 |
| Taste of overall mixture of foods and oil/fat | 5 | 5 | 5 | 5 |
| Overall evaluation (including remarks) | 5 | 5 | 5 | 5 |
| Remarks | Possible to mix uniformly with the sugar solution; easy to shape before heat drying; moderate moist taste after solidification | Possible to mix uniformly with the sugar solution; easy to shape before heat drying; moderate moist taste after solidification. | Possible to mix uniformly with the sugar solution; easy to shape before heat drying; moderate moist taste after solidification | Possible to mix uniformly with the sugar solution; easy to shape before heat drying; moderate moist taste after solidification. |

As a result, it was found possible to achieve solidification by using not only concentrated date juice but also the sugar solutions derived from a sugar cane, a maple, and a honey, and a solidified product having the same quality as that of using concentrated date juice can be prepared. In addition, it is clear that the mixtures of these test examples 49 to 52 were substantially free of water due to the composition and heat-drying treatment.

### [Example 9] Preparation of solidified mixture of foods and oils/fats

Example 7 revealed the range of optimum water conditions of a sugar solution to be used to solidify a mixture of foods and an oil/fat. Here, an examination was conducted to prepare a product with a higher degree of completion.

According to the formulae described in Table 9, a solidified mixture of foods and an oil/fat was prepared and then evaluated in the same manner as in Examples 1 and 4. Regarding a form for eating, each solidified product was served in the form of bar, so that a person could bite the product while holding with his/her hand(s). Further, dried food particles completely exposed on the surface of the oil/fat composition were not observed, but it was visually confirmed that dried food particles were completely embedded in the oil/fat composition.

Results are shown in Table 9.

**[Table 9]**

| | | | Test example 53 | |
|---|---|---|---|---|
| Raw materials, etc. | | | Amount mixed (g) | Proportion (weight percentage, %) |
| Oil/fat composition (components listed on the right were mixed, followed by micronization with medium stirring mill (bead mill)). | Plant oil/fat | Rapeseed oil | 110 | 50 |
| | Plant powder | Green pea powder | 110 | 50 |
| | Average particle diameter (µm) | | 9.8 | |
| | Mixing proportion (weight percentage, %) | | 22 | |
| Dried foods | Quinoa puff | | 100 | |
| | Dried tomato | | 55 | |
| | Cashew nut | | 80 | |
| | Dried date | | 170 | |
| | Mixing proportion (weight percentage, %) | | 41 | |
| | Mixing proportion (volume percentage, %) | | 59 | |
| Others | Green pea powder | | 102 | |
| | Almond powder | | 75 | |
| | Black pepper powder | | 1.3 | |
| | Cumin seed | | 0.6 | |
| | Cardamon | | 0.3 | |
| | Common salt | | 5.8 | |
| Sugar solution | Concentrated apple juice (water content 20 wt%) | | 190 | |
| Total | | | 1000 | |
| Evaluation results | Flavor of dried foods | | 5 | |
| | Texture of dried foods | | 5 | |
| | Taste of overall mixture | | 5 | |
| | Overall evaluation | | 5 | |
| | Remarks | | The crunchy and crispy textures of the dried foods matched the moist taste, smooth texture, and strong flavor of the oil/fat composition in a balanced manner, and the color tone (vibrant green) was good. The shape holding property was also good, to exert excellent immediate eatability. | |

As a result, as the mixtures of foods and oils/fats, and, raw materials other than these materials were combined, the sugar solutions were mixed and then these mixtures were heat-dried for solidification, it was found that the action and the effects of the present invention were clearly exhibited. That is, the crunchy and crispy textures of the dried foods matched the moist taste, smooth texture, and strong flavor of the oil/fat composition in a balanced manner, and the color tone was vivid, indicating that the food products enable significantly enjoyable experience of eating. Furthermore, immediate eatability, which is not exhibited by the mixtures of foods and oils/fats, was found to be ensured in addition to their moderate eatability and shape retaining property, demonstrating the action and the effects of the present invention. Further, it is clear that the mixture of Test Example 53 was substantially free of water due to the composition and heat-drying treatment.

## Claims

1. A mixture of a food and an oil/fat, comprising: an oil/fat composition comprising fine plant particles and a plant oil/fat; and a plant-derived dried food embedded in the oil/fat composition, wherein
the fine plant particles have an average particle diameter of 0.3 µm or more and 30 µm or less,
the plant oil/fat has fluidity at 20°C,
the weight percentage of the fine plant particles is 10 mass% or more and 80 mass% or less in the oil/fat composition, and
the particle diameter of the plant-derived dried food is 50 µm or more and 20 mm or less.

2. The mixture of the food and the oil/fat according to claim 1, wherein the weight percentage of the dried food is 20 mass% or more and 80 mass% or less in the mixture of the food and the oil/fat.

3. The mixture of the food and the oil/fat according to claim 1 or 2, wherein the volume percentage of the dried food is 25 vol% or more and 65 vol% or less in the mixture of the food and the oil/fat.

4. The mixture of the food and the oil/fat according to any one of claims 1 to 3, wherein the oil/fat composition comprising the fine plant particles and the plant oil/fat is prepared by wet micronization of dry plant powder with the plant oil/fat.

5. The mixture of the food and the oil/fat according to claim 4, wherein the wet micronization is performed using a wet medium stirring mill.

6. The mixture of the food and the oil/fat according to any one of claims 1 to 5, wherein the fine plant particles are derived from one or more materials selected from the group consisting of a grain, a potato, a bean, a seed, a vegetable, a mushroom, a spice and a herb.

7. The mixture of the food and the oil/fat according to any one of claims 1 to 6, wherein the dried food is derived from one or more materials selected from the group consisting of a grain, a potato, a bean, a seed, a vegetable, a fruit, a mushroom, a spice and a herb.

8. The mixture of the food and the oil/fat according to any one of claims 1 to 7, wherein the content of an emulsifier in the mixture of the food and the oil/fat is 1 mass% or less.

9. The mixture of the food and the oil/fat according to any one of claims 1 to 8, wherein the water content in the mixture of the food and the oil/fat is 3 mass% or less.

10. The mixture of the food and the oil/fat according to any one of claims 1 to 9, wherein the mixture of the food and the oil/fat is not heat-sterilized.

11. A solidified mixture of a food and an oil/fat, which is prepared by solidifying the mixture of the food and the oil/fat according to any one of claims 1 to 10 using a sugar solution with a water content of 10 mass% or more and 40 mass% or less.

12. The solidified mixture of the food and the oil/fat according to claim 11, wherein the sugar solution is one or more materials selected from the group consisting of a plant-derived juice, sap, a purified product of a plant-derived juice or sap and a concentrated product of a plant-derived juice or sap.

13. The solidified mixture of the food and the oil/fat according to claim 12, wherein the plant-derived juice or sap, a purified product of a plant-derived juice or sap and/or a concentrated product of a plant-derived juice or sap is derived from one or more materials selected from the group consisting of a fruit juice, a date, a sugarcane, a maple and a honey.

14. A method for producing the mixture of the food and the oil/fat according to any one of claims 1 to 10, comprising mixing the dried food with the oil/fat composition comprising the fine plant particles and the plant oil/fat to embed the dried food in the oil/fat composition.

15. The method according to claim 14, further comprising preparing the oil/fat composition through micronization of the fine plant particles and the plant oil/fat using a wet medium stirring mill.

16. The method for producing the solidified mixture of the food and the oil/fat according to any one of claims 11 to 13, comprising adding a sugar solution with a water content of 10 mass% or more and 40 mass% or less to the mixture of the food and the oil/fat according to any one of claims 1 to 10 for solidification.

17. The method according to claim 16, wherein the solidification is performed by heat-drying.

18. A method for retaining the texture and the flavor of a plant-derived dried food, comprising mixing the dried food with an oil/fat composition to embed the dried food in the oil/fat composition, wherein the oil/fat composition comprises fine plant particles with an average particle diameter of 0.3 µm or more and 30 µm or less, and a plant oil/fat having fluidity at 20°C, and the weight percentage of the fine plant particles is 10 mass% or more and 80 mass% or less in the oil/fat composition, and the particle diameter of the plant-derived dried food is 50 µm or more and 20 mm or less.

19. The method according to claim 18, further comprising preparing the oil/fat composition through micronization of the fine plant particles and the plant oil/fat using a wet medium stirring mill.

20. A method for improving eatability while retaining the texture and the flavor of a plant-derived dried food, comprising adding a sugar solution with a water content of 10 mass% or more and 40 mass% or less to a mixture of a food and an oil/fat for solidifying the mixture, wherein the mixture is prepared by mixing a dried food with an oil/fat composition to embed the dried food in the oil/fat composition, wherein the oil/fat composition comprises fine plant particles with an average particle diameter of 0.3 µm or more and 30 µm or less, and a plant oil/fat having fluidity at 20°C, and the weight percentage of the fine plant particles is 10 mass% or more and 80 mass% or less in the oil/fat composition, and the particle diameter of the plant-derived dried food is 50 µm or more and 20 mm or less.

21. The method according to claim 20, further comprising preparing the oil/fat composition through micronization of the fine plant particles and the plant oil/fat using a wet medium stirring mill.

22. The method according to claim 20, wherein the solidification is performed by heat-drying.

## Patentansprüche

1. Gemisch aus einem Nahrungsmittel und einem Öl/Fett, das Folgendes umfasst: eine Öl/Fett-Zusammensetzung, die Pflanzenfeinteilchen und ein Pflanzenöl/-fett umfasst; und ein Trockennahrungsmittel pflanzlichen Ursprungs, das in der Öl/Fett-Zusammensetzung eingebettet ist, wobei
die Pflanzenfeinteilchen einen mittleren Teilchendurchmesser von 0,3 µm oder mehr und 30 µm oder weniger aufweisen,
die/das Pflanzenöl/-fett bei 20 °C Fluidität aufweist,
der Massenanteil der Pflanzenfeinteilchen in der Öl/Fett-Zusammensetzung 10 Masse-% oder mehr und 80 Masse-% oder weniger ausmacht und
der Teilchendurchmesser des Trockennahrungsmittels pflanzlichen Ursprungs 50 µm oder mehr und 20 mm oder weniger beträgt.

2. Nahrungsmittel- und Öl/Fett-Gemisch nach Anspruch 1, wobei der Massenanteil des Trockennahrungsmittels im Nahrungsmittel- und Öl/Fett-Gemisch 20 Masse-% oder mehr und 80 Masse-% oder weniger ausmacht.

3. Nahrungsmittel- und Öl/Fett-Gemisch nach Anspruch 1 oder 2, wobei der Volumenanteil des Trockennahrungsmittels im Nahrungsmittel- und Öl/Fett-Gemisch 25 Vol.-% oder mehr und 65 Vol.-% oder weniger ausmacht.

4. Nahrungsmittel- und Öl/Fett-Gemisch nach einem der Ansprüche 1 bis 3, wobei die Öl/Fett-Zusammensetzung, die die Pflanzenfeinteilchen und das Pflanzenöl/-fett umfasst, durch Nassmikronisierung eines Trockenpflanzenpulvers mit dem Pflanzenöl/-fett hergestellt wird.

5. Nahrungsmittel- und Öl/Fett-Gemisch nach Anspruch 4, wobei die Nassmikronisierung unter Verwendung einer Nassmedium-Rührwerksmühle durchgeführt wird.

6. Nahrungsmittel- und Öl/Fett-Gemisch nach einem der Ansprüche 1 bis 5, wobei die Pflanzenfeinteilchen von einem oder mehreren Materialien stammen, die aus der Gruppe bestehend aus einem Getreide, einer Kartoffel, einer Bohne, einem Samen, einem Gemüse, einem Pilz, einem Gewürz und einem Kraut ausgewählt sind.

7. Nahrungsmittel- und Öl/Fett-Gemisch nach einem der Ansprüche 1 bis 6, wobei das Trockennahrungsmittel von einem oder mehreren Materialien stammt, die aus der Gruppe bestehend aus einem Getreide, einer Kartoffel, einer Bohne, einem Samen, einem Gemüse, einem Pilz, einem Gewürz und einem Kraut ausgewählt sind.

8. Nahrungsmittel- und Öl/Fett-Gemisch nach einem der Ansprüche 1 bis 7, wobei der Gehalt eines Emulgators im Nahrungsmittel- und Öl/Fett-Gemisch 1 Masse-% oder weniger ausmacht.

9. Nahrungsmittel- und Öl/Fett-Gemisch nach einem der Ansprüche 1 bis 8, wobei der Wassergehalt im Nahrungsmittel- und Öl/Fett-Gemisch 3 Masse-% oder weniger ausmacht.

10. Nahrungsmittel- und Öl/Fett-Gemisch nach einem der Ansprüche 1 bis 9, wobei das Nahrungsmittel- und Öl/Fett-Gemisch nicht hitzesterilisiert ist.

11. Verfestigtes Nahrungsmittel- und Öl/Fett-Gemisch, das durch Verfestigen eines Nahrungsmittel- und Öl/Fett-Gemischs nach einem der Ansprüche 1 bis 10 unter Verwendung einer Zuckerlösung mit einem Wassergehalt von 10 Masse-% oder mehr und 40 Masse-% oder weniger hergestellt wird.

12. Verfestigtes Nahrungsmittel- und Öl/Fett-Gemisch nach Anspruch 11, wobei die Zuckerlösung eines oder mehrere Materialien ist, die aus der Gruppe bestehend aus Saft pflanzlichen Ursprungs, Pflanzensaft, einem gereinigten Produkt eines Saftes pflanzlichen Ursprungs oder Pflanzensaftes und einem konzentrierten Produkt eines Saftes pflanzlichen Ursprungs oder Pflanzensaftes ausgewählt sind.

13. Verfestigtes Nahrungsmittel- und Öl/Fett-Gemisch nach Anspruch 12, wobei der Saft pflanzlichen Ursprungs oder Pflanzensaft, das gereinigten Produkt eines Saftes pflanzlichen Ursprungs oder Pflanzensaftes und/oder das konzentrierte Produkt eines Saftes pflanzlichen Ursprungs oder Pflanzensaftes von einem oder mehreren Materialien stammt, die aus der Gruppe bestehend aus einem Fruchtsaft, einer Dattel, Zuckerrohr, einem Ahorn und Honig ausgewählt sind.

14. Verfahren zur Erzeugung des Nahrungsmittel- und Öl/Fett-Gemischs nach einem der Ansprüche 1 bis 10, umfassend das Mischen des Trockennahrungsmittels mit der Öl/Fett-Zusammensetzung, die Pflanzenfeinteilchen und Pflanzenöl/-fett umfasst, um das Trockennahrungsmittel in die Öl/Fett-Zusammensetzung einzubetten.

15. Verfahren nach Anspruch 14, ferner umfassend das Herstellen der Öl/Fett-Zusammensetzung durch Mikronisierung der Pflanzenfeinteilchen und des Pflanzenöls/- fettes unter Verwendung einer Nassmedium-Rührwerksmühle.

16. Verfahren zur Erzeugung des verfestigten Nahrungsmittel- und Öl/Fett-Gemischs nach einem der Ansprüche 11 bis 13, umfassend das Zusetzen einer Zuckerlösung mit einem Wassergehalt von 10 Masse-% oder mehr und 40 Masse-% oder weniger zu einem Nahrungsmittel- und Öl/Fett-Gemisch nach einem der Ansprüche 1 bis 10 zur Verfestigung.

17. Verfahren nach Anspruch 16, wobei die Verfestigung durch Heiß-Trocknen durchgeführt wird.

18. Verfahren zur Beibehaltung der Textur und des Geschmacks eines Trockennahrungsmittel pflanzlichen Ursprungs, umfassend das Mischen des Trockennahrungsmittels mit einer Öl/Fett-Zusammensetzung, um das Trockennahrungsmittel in die Öl/Fett-Zusammensetzung einzubetten, wobei die Öl/Fett-Zusammensetzung Pflanzenfeinteilchen mit einem mittleren Teilchendurchmesser von 0,3 µm oder mehr und 30 µm oder weniger und ein Pflanzenöl/-fett mit Fluidität bei 20 °C umfasst und wobei der Massenanteil der Pflanzenfeinteilchen in der Öl/Fett-Zusammensetzung 10 Masse-% oder mehr und 80 Masse-% oder weniger ausmacht und der Teilchendurchmesser des Trockennahrungsmittels pflanzlichen Ursprungs 50 µm oder mehr und 20 mm oder weniger beträgt.

19. Verfahren nach Anspruch 18, ferner umfassend das Herstellen der Öl/Fett-Zusammensetzung durch Mikronisierung der Pflanzenfeinteilchen und des Pflanzenöls/- fettes unter Verwendung einer Nassmedium-Rührwerksmühle.

20. Verfahren zur Verbesserung der Essbarkeit bei gleichzeitiger Beibehaltung der Textur und des Geschmacks eines Trockennahrungsmittels pflanzlichen Ursprungs, umfassend das Zusetzen einer Zuckerlösung mit einem Wassergehalt von 10 Masse-% oder mehr und 40 Masse-% oder weniger zu einem Nahrungsmittel- und Öl/Fett-Gemisch zur Verfestigung des Gemischs, wobei das Gemisch durch Mischen eines Trockennahrungsmittels mit einer Öl/Fett-Zusammensetzung, um das Trockennahrungsmittel in die Öl/Fett-Zusammensetzung einzubetten, hergestellt wird, wobei die Öl/Fett-Zusammensetzung Pflanzenfeinteilchen mit einem mittleren Teilchendurchmesser von 0,3 µm oder mehr und 30 µm oder weniger und ein Pflanzenöl/-fett mit Fluidität bei 20 °C umfasst und wobei der Massenanteil der Pflanzenfeinteilchen in der Öl/Fett-Zusammensetzung 10 Masse-% oder mehr und 80 Masse-% oder weniger ausmacht und der Teilchendurchmesser des Trockennahrungsmittels pflanzlichen Ursprungs 50 µm oder mehr und 20 mm oder weniger beträgt.

21. Verfahren nach Anspruch 20, ferner umfassend das Herstellen der Öl/Fett-Zusammensetzung durch Mikronisierung der Pflanzenfeinteilchen und des Pflanzenöls/- fettes unter Verwendung einer Nassmedium-Rührwerksmühle.

22. Verfahren nach Anspruch 20, wobei die Verfestigung durch Wärmetrocknung durchgeführt wird.

## Revendications

1. Mélange d'un aliment et d'une huile/graisse, comprenant :
une composition d'huile/graisse comprenant de particules fines végétales et une huile/graisse végétale ; et
un aliment séché d'origine végétale incorporé dans la composition d'huile/graisse, dans lequel
les particules fines végétales ont un diamètre de particule moyen de 0,3 µm ou plus et de 30 µm ou moins, l'huile/graisse végétale a une fluidité à 20°C, le rapport en poids des particules fines végétales est de 10 % en masse ou plus et de 80 % en masse ou moins dans la composition d'huile/graisse, et
le diamètre de particule de l'aliment sec d'origine végétale est de 50 µm ou plus et de 20 mm ou moins.

2. Mélange de l'aliment et de l'huile/graisse selon la revendication 1, dans lequel le pourcentage en poids de l'aliment séché est de 20 % en masse ou plus et de 80 % en masse ou moins dans le mélange de l'aliment et de l'huile/graisse.

3. Mélange de l'aliment et de l'huile/graisse selon la revendication 1 ou 2, dans lequel le pourcentage en poids de l'aliment séché est de 25 % en volume ou plus et de 65 % en volume ou moins dans le mélange de l'aliment et de l'huile/graisse.

4. Mélange de l'aliment et de l'huile/graisse selon l'une quelconque des revendications 1 à 3, dans lequel la composition d'huile/graisse comprend les particules fines végétales et l'huile/graisse végétale est préparée par micronisation par voie humide de poudre végétale sèche avec l'huile/graisse végétale.

5. Mélange de l'aliment et de l'huile/graisse selon la revendication 4, dans lequel la micronisation par voie humide est effectuée en utilisant un broyeur en agitation à milieu humide.

6. Mélange de l'aliment et de l'huile/graisse selon l'une quelconque des revendications 1 à 5, dans lequel les particules fines végétales sont dérivées d'une ou plusieurs matières choisies dans le groupe constitué d'un grain, d'une pomme de terre, d'un haricot, d'une graine, d'un légume, d'un champignon, d'une épice et d'une herbe.

7. Mélange de l'aliment et de l'huile/graisse selon l'une quelconque des revendications 1 à 6, dans lequel l'aliment séché est dérivé d'une ou plusieurs matières choisies dans le groupe constitué d'un grain, d'une pomme de terre, d'un haricot, d'une graine, d'un légume, d'un fruit, d'un champignon, d'une épice et d'une herbe.

8. Mélange de l'aliment et de l'huile/graisse selon l'une quelconque des revendications 1 à 7, dans lequel la teneur d'un émulsifiant dans le mélange de l'aliment et de l'huile/graisse est de 1 % en masse ou moins.

9. Mélange de l'aliment et de l'huile/graisse selon l'une quelconque des revendications 1 à 8, dans lequel la teneur en eau dans le mélange de l'aliment et de l'huile/graisse est de 3 % en masse ou moins.

10. Mélange de l'aliment et de l'huile/graisse selon l'une quelconque des revendications 1 à 9, dans lequel le mélange de l'aliment et de l'huile/graisse n'est pas stérilisé à chaud.

11. Mélange solidifié d'un aliment et d'une huile/graisse, qui est préparé en solidifiant le mélange de l'aliment et de l'huile/graisse selon l'une quelconque des revendications 1 à 10 en utilisant une solution de sucre avec une teneur en eau de 10 % en masse ou plus et de 40 % en masse ou moins.

12. Mélange solidifié de l'aliment et de l'huile/graisse selon la revendication 11, dans lequel la solution de sucre est une ou plusieurs matières choisies dans le groupe constitué d'un jus d'origine végétale, d'une sève, d'un produit purifié d'un jus d'origine végétale ou d'une sève et d'un produit concentré d'un jus d'origine végétale ou d'une sève.

13. Mélange solidifié de l'aliment et de l'huile/graisse selon la revendication 12, dans lequel le jus d'origine végétale ou la sève, un produit purifié d'un jus d'origine végétale ou d'une sève et/ou un produit concentré d'un jus d'origine végétale ou d'une sève est dérivé d'une ou de plusieurs matières sélectionnées dans le groupe constitué d'un jus de fruit, d'une datte, d'une canne à sucre, d'un érable et d'un miel.

14. Procédé de production du mélange de l'aliment et de l'huile/graisse selon l'une quelconque des revendications 1 à 10, comprenant le mélange de l'aliment séché avec la composition d'huile/graisse comprenant les particules fines végétales et l'huile/graisse végétale pour incorporer l'aliment séché dans la composition d'huile/graisse.

15. Procédé selon la revendication 14, comprenant en outre la préparation de la composition d'huile/graisse par micronisation des particules fines végétales et de l'huile/graisse végétale en utilisant un broyeur à agitation en milieu humide.

16. Procédé de production du mélange solidifié de l'aliment et de l'huile/graisse selon l'une quelconque des revendications 11 à 13, comprenant l'addition d'une solution de sucre avec une teneur en eau de 10 % en masse ou plus et de 40 % en masse ou moins au mélange de l'aliment et de l'huile/graisse selon l'une quelconque des revendications 1 à 10 pour solidification.

17. Procédé selon la revendication 16, dans lequel la solidification est effectuée par séchage thermique.

18. Procédé de conservation de la texture et de l'arôme d'un aliment séché d'origine végétale, comprenant le mélange de l'aliment séché avec une composition d'huile/graisse pour incorporer l'aliment séché dans la composition d'huile/graisse, dans lequel la composition d'huile/graisse comprend des particules fines végétales ayant un diamètre moyen de particule de 0,3 µm ou plus et de 30 µm ou moins, et une huile/graisse végétale ayant une fluidité à 20°C, et le pourcentage en poids des particules fines végétales est de 10 % en masse ou plus et de 80 % en masse ou moins dans la composition d'huile/graisse, et le diamètre de particule de l'aliment séché d'origine végétale est de 50 µm ou plus et de 20 mm ou moins.

19. Procédé selon la revendication 18, comprenant en outre la préparation de la composition d'huile/graisse par micronisation des particules fines végétales et de l'huile/graisse végétale en utilisant un broyeur à agitation en milieu humide.

20. Procédé pour améliorer la comestibilité tout en conservant la texture et le goût d'un aliment séché d'origine végétale, comprenant l'addition d'une solution de sucre avec une teneur en eau de 10 % en masse ou plus et de 40 % en masse ou moins à un mélange d'un aliment et d'une huile/graisse pour solidifier le mélange, dans lequel le mélange est préparé en mélangeant un aliment séché avec une composition d'huile/graisse pour incorporer l'aliment séché dans la composition d'huile/graisse, dans lequel la composition d'huile/graisse comprend de particules fines végétales avec un diamètre moyen de particule de 0,3 µm ou plus et de 30 µm ou moins, et une huile/graisse végétale ayant une fluidité à 20°C, et le pourcentage en poids des particules fines végétales est de 10 % en masse ou plus et de 80 % en masse ou moins dans la composition d'huile/graisse, et le diamètre de particule de l'aliment séché d'origine végétale est de 50 µm ou plus et de 20 mm ou moins.

21. Procédé selon la revendication 20, comprenant en outre une préparation de la composition d'huile/graisse par micronisation des particules fines végétales et de l'huile/graisse végétale en utilisant un broyeur à agitation en milieu humide.

22. Procédé selon la revendication 20, dans lequel la solidification est effectuée par séchage thermique.
